# EUROPÄISCHE PATENTSCHRIFT

(11) **EP 1 279 686 B1**
(45) Veröffentlichungstag und Bekanntmachung des Hinweises auf die Patenterteilung: **20.08.2008**
(21) Anmeldenummer: 02090244.1
(22) Anmeldetag: 11.07.2002
(51) Int. Cl.: C08G 18/38, C08G 63/685

(54) **Polymere aus Triazinderivaten**
Polymers from triazine derivatives
Polymères à partir de dérivés de triazine

(30) Priorität: 26.07.2001 DE 10136321
(43) Veröffentlichungstag der Anmeldung: 29.01.2003
(73) Patentinhaber: AMI Agrolinz Melamine International GmbH, 4020 Linz (AT)
(72) Erfinder: Rätzsch, Manfred Prof. Dr., 4062 Wilhering (AT); Burger, Martin Dr., 4020 Linz (AT); Arnold, Manfred Prof. Dr., 06667 Leissling (DE); Frank, Willy Dr., 06246 Bad Lauchstädt (DE)
(74) Vertreter: Gross, Felix

(56) Entgegenhaltungen:
- GB-A- 1 049 288
- US-A- 3 328 321
- US-A- 3 399 151
- US-A- 4 369 258

## Beschreibung

Die Erfindung betrifft Polymere aus Triazinderivaten zur Herstellung von Halbzeugen und Formstoffen, die eine verbesserte Zähigkeit und hohe Flammwidrigkeit und Festigkeit besitzen, sowie Verfahren zu deren Herstellung.

Polymere aus Triazinderivaten wie Melamin-Formaldehyd-Harze [Ullmanns Encyclopedia of Industrial Chemistry (1987), Vol. A2, 130-131], Benzoguanamin-Formaldehyd-Harze [Duroplaste, Kunststoff-Handbuch Bd. 10, 994-997, Carl Hanser-Verlag München 1988], Polytriazinether oder Polyaminotriazine [Bjuller, K., Teplo- i Termostoikie Polimery, S. 565-585, Moskva, Khimia 1984] sind bekannt. Von Nachteil bei diesen Polymeren aus Triazinderivaten ist die geringe Zähigkeit daraus hergestellter Halbzeuge und Formstoffe.

Weiterhin bekannt sind Melamin-Propylenoxid-Blockcopolymere (DE 21 18 868) und Blockcopolymere aus N,N'-Hydroxyethylmelaminen oder N,N'-Hydroxyarylmelaminen mit Ethylenoxid und Propylenoxid (US 4 356 304). Der Nachteil dieser Blockcopolymeren besteht darin, dass die Produkte auf Grund der Länge der Polyalkylenoxidsequenzen im Blockcopolymer und von nichtgebundenem Polyalkylenoxid als Nebenprodukt bei der Verarbeitung Halbzeuge und Formstoffe mit herabgesetzte Flammwidrigkeit und Festigkeit ergeben, obwohl gute Zähigkeitseigenschaften erzielt werden.

Die Aufgabe der vorliegenden Erfindung sind Polymere aus Triazinderivaten zur Herstellung von Halbzeugen und Formstoffen, die eine verbesserte Zähigkeit und hohe Flammwidrigkeit und Festigkeit besitzen, sowie Verfahren zu deren Herstellung.

Die Aufgabe wurde erfindungsgemäss durch Polymere auf Basis von
A) 60 bis 95 Masse% Triazinderivatmischungen aus
   A1) 20 bis 70 Masse% Triazinderivaten mit Hydroxyalkylaminogruppen der Formel 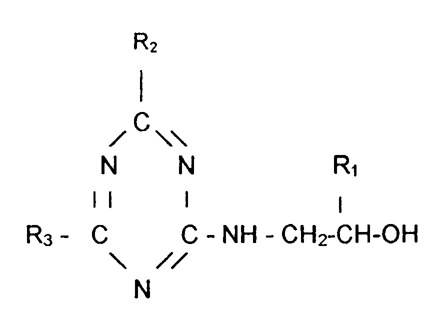
      - R₁ =: H oder C₁-C₄ - Alkyl
      - R₂ =: -H; -OH; C₁-C₄ - Alkyl, -C₆H₅; -NH₂; -NH-CH₂-CHR₁-OH; -NH-CH₂-OR₁ oder -N(-CH₂-OR₁)₂,
      - R₃ =: -H; -OH; C₁-C₄ - Alkyl, -C₆H₅; -NH₂; -NH-CH₂-CHR₁-OH; -NH-CH₂-OR₁ oder -N(-CH₂-OR₁)₂,
      wobei die Zahl der Hydroxyalkylaminogruppen 1 bis 3 beträgt,
      und
   A2) 80 bis 30 Masse% Triazinderivaten mit Bis(hydroxyalkyl)iminogruppen der Formel 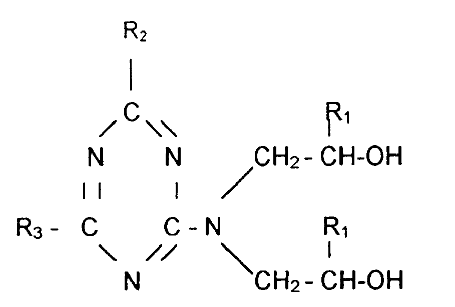
      - R₁ =: H oder C₁-C₄ - Alkyl
      - R₂ =: -H; -OH; C₁-C₄ - Alkyl, -C₆H₅; -NH₂; -NH-CH₂-CHR₁-OH; -N[CH₂-CHR₁-OH]₂, -NH-CH₂-OR₁ oder -N(-CH₂-OR₁)₂,
      - R₃ =: -H; -OH; C₁-C₄ - Alkyl, -C₆H₅; -NH₂; -NH-CH₂-CHR₁-OH; -N[CH₂-CHR₁-OH]₂, -NH-CH₂-OR₁ oder -N(-CH₂-OR₁)₂,
      wobei die Zahl der Hydroxyalkylgruppen 2 bis 6 beträgt,
B) 5 bis 40 Masse% mehrfunktionellen Verbindungen, bestehend aus
   B1) Isocyanaten der Formel R (N = C = O)ₓ, wobei R = C₄ - C₁₈-Alkyl, C₅ - C8-Cycloalkyl und/oder C₆ - C₁₅ -Aryl und x = 2; 3; 4 bedeuten, und/oder oligomeren Polyestern bzw. Polyethern mit Isocyanat-Endgruppen und Molmassen von 200 bis 5000, oder
   B2) aliphatischen C₂-C₃₆-Dicarbonsäuren, -Dicarbonsäureestem bzw. -Dicarbonsäurechloriden, aliphatischen C₄-C₆-Dicarbonsäureanhydriden und/oder aromatischen mehrbasischen C₈-C₂₃-Carbonsäuren, -Carbonsäureestern, -Carbonsäurechloriden bzw. -Carbonsäureanhydriden, oder
   B3) aliphatischen C₈-C₂₅ - bzw. aromatischen C₁₂-C₂₈ - Di- und/oder Triglycidylverbindungen,
   und gegebenenfalls
C) 1 bis 20 Masse% weiteren funktionellen Verbindungen, bestehend aus
   C1) C₂ - C₁₈-aliphatischen -, C₅- C₈-cycloaliphatischen und/oder C₆ - C₁₅-aromatischen Dihydroxyverbindungen, und/oder
   C2) Polyalkylenglycolen mit Molmassen von 200 bis 6000, und/oder
   C3) C₁-C₈-aliphatischen Aldehyden,
gelöst.

Bevorzugt sind die Polymere aus Triazinderivaten Prepolymere mit Molmassen-Zahlenmitteln von 200 bis 8000, vemetzte duroplastische Polymere oder thermoplastische Polymere mit Molmassen-Zahlenmitteln von 8 x 10³ bis 10⁷.

Die die Basis für die Polymere aus Triazinderivaten bildenden Triazinderivatmischungen A) enthalten bevorzugt
A1) Hydroxyalkylaminogruppen substituiertem Triazin mit einem Molverhältnis Triazin/Hydroxyalkylaminogruppen 1 : 1 bis 1 : 2,5, und
A2) Bis(hydroxyalkyl)aminogruppen und Hydroxyalkylaminogruppen substituiertem Triazin mit einem Molverhältnis Triazin/Hydroxyalkylgruppen 1 : 2,5 bis 1 : 5,5 .

Beispiele für weitere geeignete Triazinderivate als Basis für die Polymere aus Triazinderivaten sind Amino-C₁-C₁₂-alkylgruppen substituierte Melamine, Diaminomethyltriazine wie 2,4-Di(6-aminohexylamino)-1,3,5-triazin oder Diaminophenyltriazine, veretherte Methylolmelamine, Ammelin, Ammelid, Melem, Melon, Melam, Benzoguanamin, Acetoguanamin, Methoxymethylbenzoguanamin, Caprinoguanamin und/oder Butyroguanamin, die durch Hydroxyalkylgruppen substituiert sind.

Neben den Triazinderivaten bilden die Basis für die Polymere aus Triazinderivaten mehrfunktionellen Verbindungen, bestehend aus
B1) Isocyanaten der Formel R (N = C = O)ₓ, wobei R = C₄ - C₁₈-Alkyl, C₅ - C₈-Cycloalkyl und/oder C₆ - C₁₅ -Aryl und x = 2; 3; 4 bedeuten, und/oder oligomeren Polyestern bzw. Polyethern mit Isocyanat-Endgruppen und Molmassen von 200 bis 5000, oder
B2) aliphatischen C₂-C₃₆-Dicarbonsäuren, -Dicarbonsäureestern bzw. -Dicarbonsäurechloriden, aliphatischen C₄-C₆-Dicarbonsäureanhydriden und/oder aromatischen mehrbasischen C₈-C₂₃-Carbonsäuren, -Carbonsäureestern, -Carbonsäurechloriden bzw. -Carbonsäureanhydriden, oder
B3) aliphatischen C₈-C₂₅ - bzw. aromatischen C₁₂-C₂₈ - Di- und/oder Triglycidylverbindungen,

Als Isocyanate B1) werden Tetramethylendiisocyanat, Hexamethylendiisocyanat, Toluylendiisocyanat und/oder Diphenylmethandiisocyanat bevorzugt.

Beispiele für weitere geeignete Isocyanate B1) als Basis für die Polymere aus Triazinderivaten sind Pentamethylendiisocyanat, Phenylendiisocyanat, Naphthylendiisocyanat, Triphenylmethantriisocyanat und Vinylphenyldiisocyanat sowie Polyethylenglycole oder Polypropylenglycole mit Isocyanat-Endgruppen.

Beispiele für geeignete aliphatische C₂-C₃₆-Dicarbonsäuren als Komponente B2) für die Polymere aus Triazinderivaten sind Oxalsäure, Bemsteinsäure, Adipinsäure, Tetradecandicarbonsäure, Maleinsäure und C₂₄-C₃₆-Dimersäuren.

Beispiele für geeignete aliphatische C₂-C₃₆-Dicarbonsäureester als Komponente B2) für die Polymere aus Triazinderivaten sind Adipinsäurediethylester, Tetradecandicarbonsäurediethylester und Maleinsäuredimethylester.

Bevorzugte Dicarbonsäureanhydride B2) als bifunktionelle Verbindungen B) sind Bernsteinsäureanhydrid, Maleinsäureanhydrid, Glutarsäureanhydrid, Phthalsäureanhydrid und/oder Norbomendicarbonsäureanhydrid.

Beispiele für weitere geeignete Dicarbonsäureanhydride sind Allylsuccinsäureanhydrid, Bicyclooctendicarbonsäureanhydrid, Carbomethoxymaleinsäureanhydrid, Citraconsäureanhydrid, Cyclohexendicarbonsäureanhydrid, Dodecencylbernsteinsäureanhydrid, Itaconsäureanhydrid und Pyromellithsäureanhydrid.

Beispiele für geeignete aromatische mehrbasische C₈-C₂₃-Carbonsäuren als Komponente B2) für die Polymere aus Triazinderivaten sind Phthalsäure, Terephthalsäure, Trimellithsäure und Pyromellithsäure.

Beispiele für geeignete aromatische mehrbasische C₈-C₂₃-Carbonsäureester als Komponente B2) für die Polymere aus Triazinderivaten sind Phthalsäurediethylester, Terephthalsäurediethylester und Trimellithsäuretrimethylester.

Beispiele für geeignete aliphatische C₈-C₂₅ - bzw. aromatische C₁₂-C₂₈ - Di- und/oder Triglycidylverbindungen als Komponente B3) für die Polymere aus Triazinderivaten sind Ethylenglycoldiglycidether, Glycerintriglycidether, Octandioldiglycidether, Hydrochinondiglycidether und Diphenylolpropandiglycidether.

Die Basis für die Polymere aus Triazinderivaten können gegebenenfalls weitere funktionelle Verbindungen, bestehend aus
C1) C₂ - C₁₈-aliphatischen -, C₅- C₈-cycloaliphatischen und/oder C₆ - C₁₅-aromatischen Dihydroxyverbindungen, und/oder
C2) Polyalkylenglycolen mit Molmassen von 200 bis 6000, und/oder
C3) C₁-C₈-aliphatischen Aldehyden, bilden.

Beispiele für geeignete C₂ - C₁₈-aliphatische Dihydroxyverbindungen als Komponente C1) sind Ethylenglycol, Ethylhexandiol und Octadecandiol.

Beispiele für geeignete C₅- C₈-cycloaliphatische Dihydroxyverbindungen als Komponente C1) sind Dihydroxycyclopentan, Dihydroxycyclohexan und Dihydroxyethylcyclohexan.

Beispiele für geeignete C₆ - C₁₅-aromatischen Dihydroxyverbindungen als Komponente C1) sind Hydrochinon, Diphenylolpropan und Dihydroxydiphenyloxid.

Beispiele für geeignete Polyalkylenglycole mit Molmassen von 200 bis 6000 als Komponente C2) für die Polymere aus Triazinderivaten sind Polyethylenglycol und Polypropylenglycol.

Beispiele für geeignete C₁-C₈-aliphatische Aldehyde als Komponente C2) für die Polymere aus Triazinderivaten sind Formaldehyd, Acetaldehyd, Trimethylolacetaldehyd, Acrolein, Furfurol und Glyoxal.

Die Polymere aus Triazinderivaten für Halbzeuge und Formstoffe mit hoher Flammwidrigkeit, Zähigkeit und Festigkeit können nach einem Schmelzeverfahren in kontinuierlichen Knetern oder in flüssiger Phase nach einem Rührreaktorverfahren hergestellt werden.

Beim Schmelzeverfahren zur Herstellung von Polymeren aus Triazinderivaten für Halbzeuge und Formstoffe mit verbesserter Zähigkeit und hoher Flammwidrigkeit und Festigkeit werden erfindungsgemäss in kontinuierlichen Knetern Mischungen aus
A) 60 bis 95 Masse% Triazinderivatmischungen aus
   A1) 20 bis 70 Masse% Triazinderivaten mit Hydroxyalkylaminogruppen der Formel 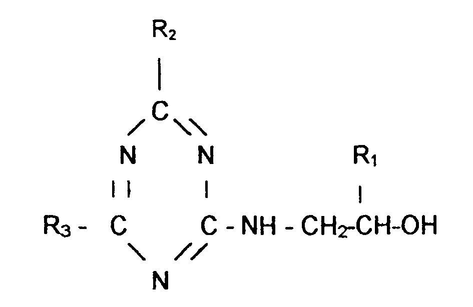
      - R₁ =: H oder C₁-C₄ - Alkyl
      - R₂ =: -H; -OH; C₁-C₄ - Alkyl, -C₆H₅; -NH₂; -NH-CH₂-CHR₁-OH; -NH-CH₂-OR₁ oder -N(-CH₂-OR₁)₂,
      - R₃ =: -H; -OH; C₁-C₄ - Alkyl, -C₆H₅; -NH₂; -NH-CH₂-CHR₁-OH; -NH-CH₂-OR₁ oder -N(-CH₂-OR₁)₂,
      wobei die Zahl der Hydroxyalkylaminogruppen 1 bis 3 beträgt,
      und
   A2) 80 bis 30 Masse% Triazinderivaten mit Bis(hydroxyalkyl)aminogruppen der Formel 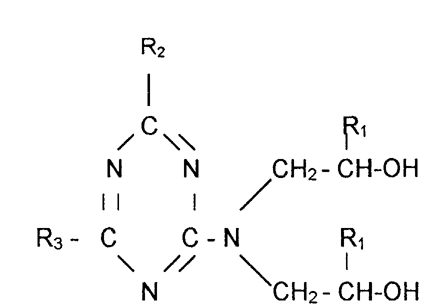
      - R₁ =: H oder C₁-C₄ - Alkyl
      - R₂ =: -H; -OH; C₁-C₄ - Alkyl, -C₆H₅; -NH₂; -NH-CH₂-CHR₁-OH; -N[CH₂-CHR₁-OH]₂, -NH-CH₂-OR₁ oder -N(-CH₂-OR₁)₂,
      - R₃ =: -H; -OH; C₁-C₄ - Alkyl, -C₆H₅; -NH₂; -NH-CH₂-CHR₁-OH; -N[CH₂-CHR₁-OH]₂, -NH-CH₂-OR₁ oder -N(-CH₂-OR₁)₂,
      wobei die Zahl der Hydroxyalkylgruppen 2 bis 6 beträgt,
B) 5 bis 40 Masse% mehrfunktionellen Verbindungen, bestehend aus
   B1) Isocyanaten der Formel R (N = C = O)ₓ, wobei R = C₄ - C₁₈-Alkyl, C₅ - C₈-Cycloalkyl und/oder C₆ - C₁₅-Aryl und x = 2; 3; 4 bedeuten, und/oder oligomeren Polyestern bzw. Polyethern mit Isocyanat-Endgruppen und Molmassen von 200 bis 5000, oder
   B2) aliphatischen C₂-C₃₆-Dicarbonsäuren, -Dicarbonsäureestern bzw. -Dicarbonsäurechloriden, aliphatischen C₄-C₆-Dicarbonsäureanhydriden und/oder aromatischen mehrbasischen C₈-C₂₃-Carbonsäuren, -Carbonsäureestern, -Carbonsäurechloriden bzw. -Carbonsäureanhydriden, oder
   B3) aliphatischen C₈-C₂₅ - bzw. aromatischen C₁₂-C₂₈ - Di- und/oder Triglycidylverbindungen,
   und gegebenenfalls
C) 1 bis 20 Masse% weiteren funktionellen Verbindungen, bestehend aus
   C1) C₂ - C₁₈-aliphatischen -, C₅- C₈-cycloaliphatischen und/oder C₆ - C₁₅-aromatischen Dihydroxyverbindungen, und/oder
   C2) Polyalkylenglycolen mit Molmassen von 200 bis 6000, und/oder
   C3) C₁-C₈-aliphatischen Aldehyden,
bei Temperaturen von 160 bis 280°C aufgeschmolzen, bei einer Verweilzeit von 5 bis 20 min umgesetzt, vacuumentgast, ausgetragen und granuliert, oder, gegebenenfalls unter Zusatz saurer Katalysatoren, durch ein Formwerkzeug ausgetragen und als Profil, Rohr oder Platte ausgeformt, wobei die bifunktionellen Verbindungen B) und die weiteren funktionellen Verbindungen C) mit den Gemischen A) vor der Dosierung in den kontinuierlichen Kneter vorgemischt werden können oder die bifunktionellen Verbindungen B) und die weiteren funktionellen Verbindungen C) nach Aufschmelzen der Gemische A) in die Schmelze von A) in den kontinuierlichen Kneter dosiert werden.

Die eingesetzten kontinuierlichen Kneter sind bevorzugt Doppelschneckenextruder mit L/D 32 bis 48 oder Einschneckenextruder mit Plungerschnecke.

Für die Herstellung von Triazin-Prepolymeren mit Molmassen-Zahlenmitteln von 200 bis 8000 sind Schmelzetemperaturen von 160 bis 220°C und ein Molverhältnis Triazinderivate A)/mehrfunktionelle Verbindungen B) bzw. Triazinderivate A) + weitere funktionelle Verbindungen C) / mehrfunktionelle Verbindungen B) von 1,05 bis 1,30 erforderlich. Dieses Herstellungsverfahren ist insbesondere für Formmassen geeignet, wobei die Rezepturierung der Formmassen (Homogenisierung mit Füll- und/oder Verstärkerstoffen und Härtern) in einem nachgeordneten Verfahrensschritt oder durch Dosierung und Homogenisierung der Rezepturkomponenten in den kontinuierlichen Kneter vor dem Produktaustrag erfolgen kann.

Die Herstellung thermoplastischer Polymerer mit Molmassen-Zahlenmitteln von 8 x 10³ bis 10⁷ aus Triazinderivaten erfordert Schmelzetemperaturen von 220 bis 280°C. Als Triazinderivate werden Produkte eingesetzt, bei denen die Zahl der Hydroxyalkylsubstituenten im Triazinderivat im Mittel 0,96 bis 1,04 beträgt. Bei der Schmelzereaktion muss ein Molverhältnis Triazinderivate A) / bifunktionelle Verbindungen B) bzw. Triazinderivate A) + weitere funktionelle Verbindungen C) / bifunktionelle Verbindungen B) von 0,98 bis 1,02 eingestellt werden und eine sorgfältige Vacuumentgasung der Produkte erfolgen.

Für die Direktherstellung von vemetzten duroplastischen Profilen, Rohren oder Platten aus Triazin-Polymeren wird wie bei der Herstellung von Prepolymeren bei Schmelzetemperaturen von 160 bis 220°C und zunächst bei einem Molverhältnis Triazinderivate A)/mehrfunktionelle Verbindungen B) bzw. Triazinderivate A) + weitere funktionelle Verbindungen C) / mehrfunktionelle Verbindungen B) von 1,05 bis 1,30 gearbeitet. Zusätzlich werden jedoch in eine nachgeordnete Reaktionszone im kontinuierlichen Kneter vor dem Formwerkzeug weitere Anteile an mehrfunktionellen Verbindungen B) dosiert, so dass sich in der Reaktionszone vor dem Formwerkzeug ein Molverhältnis Triazinderivate A) / mehrfunktionelle Verbindungen B) bzw. Triazinderivate A) + weitere funktionelle Verbindungen C) / mehrfunktionelle Verbindungen B) von 0,75 bis 0,95 einstellt.

Eine zweite Variante der Direktherstellung von vemetzten duroplastischen Profilen, Rohren oder Platten aus Triazin-Polymeren besteht darin, dass bei der Herstellung von Prepolymeren als weitere funktionelle Verbindungen C) aliphatische Aldehyde eingesetzt werden und ein Molverhältnis Triazinderivate A) / mehrfunktionelle Verbindungen B) /aliphatische Aldehyde C) von 1 : 1 : 1 bis 1 : 1 : 3 eingestellt wird und in eine nachgeordnete Reaktionszone im kontinuierlichen Kneter vor dem Formwerkzeug saure Katalysatoren wie Ammoniumperoxidisulfat, Ammoniumphosphat, Ammoniumsulfat, Methylammoniumphthalat oder Diethylphosphat zudosiert werden.

Beim Rührreaktorverfahren zur Herstellung von Polymeren aus Triazinderivaten für Halbzeuge und Formstoffe mit verbesserter Zähigkeit und hoher Flammwidrigkeit und Festigkeit werden erfindungsgemäss in Rührreaktoren mit Bodenablass, gegebenenfalls Azeotropabscheider und Kondensator, Dispersionen in C₅-C₁₂-Kohlenwasserstoffen und/oder C₃-C₁₂-Ketonen oder Lösungen in Dimethylsulfoxid, Dimethylformamid und/oder Dimethylacetamid mit einem Feststoffgehalt von 5 bis 70 Masse% aus
A) 60 bis 95 Masse% Triazinderivatmischungen aus
   A1) 20 bis 70 Masse% Triazinderivaten mit Hydroxyalkylaminogruppen der Formel 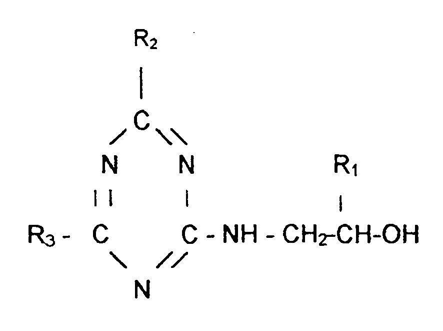
      - R₁: = H oder C₁-C₄ - Alkyl
      - R₂ =: -H; -OH; C₁-C₄ - Alkyl, -C₆H₅; -NH₂; -NH-CH₂-CHR₁-OH; -NH-CH₂-OR₁ oder -N(-CH₂-OR₁)₂,
      - R₃ =: -H; -OH; C₁-C₄ - Alkyl, -C₆H₅; -NH₂; -NH-CH₂-CHR₁-OH; -NH-CH₂-OR₁ oder -N(-CH₂-OR₁)₂,
      wobei die Zahl der Hydroxyalkylaminogruppen 1 bis 3 beträgt,
      und
   A2) 80 bis 30 Masse% Triazinderivaten mit Bis(hydroxyalkyl)aminogruppen der Formel 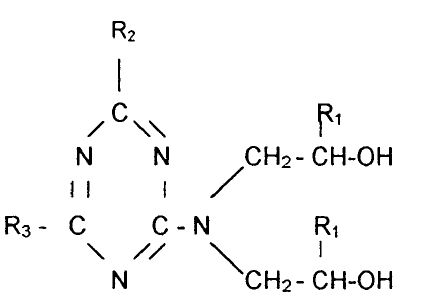
      - R₁ =: H oder C₁-C₄ - Alkyl
      - R₂ =: -H; -OH; C₁-C₄ - Alkyl, -C₆H₅; -NH₂; -NH-CH₂-CHR₁-OH; -N[CH₂-CHR₁-OH]₂, -NH-CH₂-OR₁ oder -N(-CH₂-OR₁)₂,
      - R₃ =: -H; -OH; C₁-C₄ - Alkyl, -C₆H₅; -NH₂; -NH-CH₂-CHR₁-OH; -N[CH₂-CHR₁-OH]₂, -NH-CH₂-OR₁ oder -N(-CH₂-OR₁)₂,
      wobei die Zahl der Hydroxyalkylgruppen 2 bis 6 beträgt,
B) 5 bis 40 Masse% mehrfunktionellen Verbindungen, bestehend aus
   B1) Isocyanaten der Formel R (N = C = O)ₓ, wobei R = C₄ - C₁₈-Alkyl, C₅ - C₈-Cycloalkyl und/oder C₆ - C₁₅ -Aryl und x = 2; 3; 4 bedeuten, und/oder oligomeren Polyestern bzw. Polyethem mit Isocyanat-Endgruppen und Molmassen von 200 bis 5000, oder
   B2) aliphatischen C₂-C₃₆-Dicarbonsäuren, -Dicarbonsäureestern bzw. -Dicarbonsäurechloriden, aliphatischen C₄-C₆-Dicarbonsäureanhydriden und/oder aromatischen mehrbasischen C₈-C₂₃-Carbonsäuren, -Carbonsäureestem, -Carbonsäurechloriden bzw. -Carbonsäureanhydriden, oder
   B3) aliphatischen C₈-C₂₅ - bzw. aromatischen C₁₂-C₂₈ - Di- und/oder Triglycidylverbindungen,
   und gegebenenfalls
C) 1 bis 20 Masse% weiteren funktionellen Verbindungen, bestehend aus
   C1) C₂- C₁₈-aliphatischen -, C₅- C₈-cycloaliphatischen und/oder C₆ - C₁₅-aromatischen Dihydroxyverbindungen, und/oder
   C2) Polyalkylenglycolen mit Molmassen von 200 bis 6000, und/oder
   C3) C₁-C₈-aliphatischen Aldehyden,
bei Temperaturen von 50 bis 150°C, Drücken von 1 bis 15 bar und Verweilzeiten von 40 min bis 12 Std. homogenisiert und umgesetzt, und, gegebenenfalls nach destillativer Einengung, die polymeren Reaktionsprodukte ausgetragen und durch Sprühtrocknung oder nach Filtration getrocknet, und die Umsetzung wird gegebenenfalls in einer zweiten Reaktionsstufe nach Aufschmelzen im kontinuierlichen Kneter bei Temperaturen von 160 bis 280°C weitergeführt, und die Reaktionsprodukte werden entgast, ausgetragen und granuliert, wobei in Abhängigkeit von der Reaktionstemperatur und der Reaktivität der Reaktanden die bifunktionellen Verbindungen B) und die weiteren funktionellen Verbindungen C) vollständig oder portionsweise bzw. kontinuierlich den Gemischen A) im Rührreaktor zugesetzt werden.

Geeignete C₅-C₁₂-Kohlenwasserstoffe, die beim Rührreaktorverfahren zur Herstellung von Polymeren aus Triazinderivaten eingesetzt werden können, sind aliphatische Kohlenwasserstoffe wie Pentan, Heptan oder Dodecan, cycloaliphatische Kohlenwasserstoffe wie Cyclopentan oder Cyclohexan oder aromatische Kohlenwasserstoffe wie Benzen, Toluen oder Xylen.

Geeignete C₃-C₁₂-Ketone, die beim Rührreaktorverfahren zur Herstellung von Polymeren aus Triazinderivaten eingesetzt werden können, sind Aceton, Methylethylketon, Isopropylethylhexylketon oder Isobutylmethylketon.

Die Molverhältnisse Triazinderivate A)/mehrfunktionelle Verbindungen B) bzw. Triazinderivate A) + weitere funktionelle Verbindungen C) / mehrfunktionelle Verbindungen B) für die Herstellung von Triazin-Prepolymeren mit Molmassen-Zahlenmitteln von 200 bis 8000 und für die Herstellung der thermoplastischen Polymeren mit Molmassen-Zahlenmitteln von 8 x 10³ bis 10⁷ beim Rührreaktorverfahren entsprechen denen beim Schmelzeverfahren.

Bei der Herstellung der thermoplastischen Polymeren aus Triazinderivaten mit Molmassen-Zahlenmitteln von 8 x 10³ bis 10⁷ ist es von Vorteil, nach der Umsetzung im Rührreaktor die Umsetzung in der zweiten Verfahrensstufe in der Schmelze fortzuführen, wenn hohe Molmassen erzielt werden sollen.

Die Polymere aus Triazinderivaten sind bevorzugt zur Herstellung von nichtvernetzten oder vernetzten Press- bzw. Spritzgusserzeugnissen für Anwendungen in der Elektrotechnik und Elektronik, zur Herstellung von Folien und Fasern, insbesondere für Filtermaterialien und nichtbrennbare Textilien, von Rohren, Platten und Hohlkörpern, von Feststoffe oder Flüssigkeiten enthaltenden Mikrokapseln für fotoempfindliche und druckempfindliche Foto- und Kopierpapiere sowie in der Pharmazie und Agrochemie; von Schaumstoffen zur Wärme- und Schalldämmung im Bauwesen und in der Fahrzeugindustrie, von Beschichtungen, insbesondere als Einbrennlackierungen in der Fahrzeugund Geräteindustrie sowie für kratzfeste Holzlackierungen, von Schichtpressstoffen für Anwendungen im Bauwesen und in der Möbelindustrie und von imprägnierten flächigen Trägermaterialien, insbesondere in Form von imprägnierten flächigen Trägermaterialien in der Textilindustrie und Papierindustrie, geeignet.

Bevorzugte flächige Trägermaterialien, die in den Verbunden mit Polymeren aus Triazindrivaten enthaltenen sein können, sind Papier, Pappe, Holzerzeugnisse, Holzfaserplatten, Holzspanplatten, Textilvliese, Textilgewebe, Kunststofffolien, Kunststoffplatten, flächige Kunststoffteile, Metallfolien oder flächige Metallteile wie Karosserieteile im Automobilbereich oder Abdeckungen im Geräte- und Maschinenbau.

Gegenüber Halbzeugen und Formstoffen aus üblichen Triazinpolymeren wie Melaminharzen oder Guanaminharzen besitzen die Halbzeuge und Formstoffe aus den erfindungsgemässen Polymeren aus Triazinderivaten eine verbesserter Zähigkeit und hohe Flammwidrigkeit und Festigkeit sowie bei der thermischen Nachverformung der Erzeugnisse eine verbesserte Resistenz gegenüber Rissbildung, ohne dass ein deutlichem Abfall der Festigkeit erfolgt.

Die Rezepturierung der Formmassen zur Herstellung der Pressteile, Spritzgussteile oder Profile aus den erfindungsgemässen Polymeren aus Triazinderivaten in Form von Prepolymeren mit Molmassen-Zahlenmitteln von 200 bis 8000 kann insbesondere durch Trockenimprägnierung erfolgen. Beim Trockenimprägnierungsverfahren werden die Prepolymere aus Triazinderivaten in Form von Pulvern bzw. Granulaten mit Füllstoffen wie Holzmehl oder Gesteinsmehl und üblichen Zusatzstoffen wie Härtern, Gleitmitteln und Pigmenten trocken vorgemischt und auf Walzwerken oder kontinuierlichen Knetern homogenisiert. Bevorzugte Verarbeitungstemperaturen liegen bei der Herstellung von Pressteilen bei 140°C bis 190°C und bei der Herstellung von Spritzgussteilen bei 155°C bis 200°C. Die Pressteile, Spritzgussteile oder Profile aus den erfindungsgemässen Prepolymeren aus Triazinderivaten besitzen eine verbesserte Zähigkeit und hohe Flammwidrigkeit und Festigkeit.

Beispiele für geeignete Härter, die bei der Herstellung der Pressteile, Spritzgussteile oder Profile aus den erfindungsgemässen Polymeren von Triazinderivaten in Form von Prepolymeren mit Molmassen-Zahlenmitteln von 200 bis 8000 eingesetzt werden können, sind:
- saure Katalysatoren wie Ammoniumperoxidisulfat, Ammoniumphosphat, Ammoniumsulfat, Methylammoniumphthalat oder Diethylphosphat,
- Polyisocyanate wie Tetramethylendiisocyanat, Hexamethylendiisocyanat, Toluylendiisocyanat, Diphenylmethandiisocyanat, Phenylendiisocyanat, Naphthylendiisocyanat und Triphenylmethantriisocyanat,
- Polycarbonsäureanhydride wie Bemsteinsäureanhydrid, Maleinsäureanhydrid, Phthalsäureanhydrid, Dodecencylbemsteinsäureanhydrid, Itaconsäureanhydrid und Pyromellithsäureanhydrid.

Die Herstellung von Spritzgusserzeugnissen, Folien, Fasern, Rohren, Platten oder Hohlkörpern aus den erfindungsgemässen thermoplastischen Polymeren aus Triazinderivaten mit Molmassen-Zahlenmitteln von 8 x 10³ bis 10⁷ kann auf üblichen Thermopiast-Verarbeitungsmaschinen bei Verarbeitungstemperaturen von 220 bis 300°C erfolgen. Für die Herstellung von Spritzgusserzeugnissen und Fasern sind Polymere aus Triazinderivaten mit Molmassen-Zahlenmitteln von 8 x 10³ bis 10⁵ geeignet, für die Herstellung von Folien, Rohren, Platten oder Hohlkörpern eignen sich Polymere aus Triazinderivaten mit Molmassen-Zahlenmitteln von 5 x 10⁴ bis 10⁷.

Bei der thermoplastischen Verarbeitung der erfindungsgemässen thermoplastischen Polymeren aus Triazinderivaten mit Molmassen-Zahlenmitteln von 8 x 10³ bis 10⁷ können als Hilfsstoffe 0,01 bis 2,5 Masse% Stabilisatoren und/oder 0,01 bis 5 Masse% Verarbeitungshilfsmittel, jeweils bezogen auf die eingesetzten Polymere aus Triazinderivaten, zugesetzt werden.

Geeignete Stabilisatoren sind bevorzugt Mischungen aus 0,01 bis 0,6 Masse% phenolischen Antioxidantien, 0,01 bis 0,6 Masse% 3-Arylbenzofuranonen, 0,01 bis 0,6 Masse% Verarbeitungsstabilisatoren auf Basis von Phosphiten , 0,01 bis 0,6 Masse% Hochtemperaturstabilisatoren auf Basis von Disulfiden und Thioäthem und/oder 0,01 bis 0,8 Masse% sterisch gehinderten Aminen (HALS) .

Als Verarbeitungshilfsmittel können bei der Verarbeitung der erfindungsgemässen thermoplastischen Polymeren aus Triazinderivaten Caldumstearat, Magnesiumstearat und/oder Wachse zugesetzt werden.

Die Spritzgusserzeugnisse, Folien, Fasern, Rohre, Platten und Hohlkörper aus den erfindungsgemässen thermoplastischen Polymeren aus Triazinderivaten besitzen gegenüber Erzeugnissen aus üblichen Triazinpolymeren wie Melaminharzen oder Guanaminharzen eine verbesserter Zähigkeit und hohe Flammwidrigkeit und Festigkeit.

Die Herstellung von Mikrokapseln erfolgt durch Eintrag der erfindungsgemässen Polymeren aus Triazinderivaten in Form von Prepolymeren mit Molmassen-Zahlenmitteln von 200 bis 8000 in eine emulgatorfreie wässrige Dispersion von festen oder flüssigen Kapselkembildnem, die saure Katalysatoren enthält, und nachfolgende Aushärtung und Sprühtrocknung. Der Einsatz der Kapselkembildner bei der Herstellung der Mikrokapseln wird durch das Anwendungsgebiet der Mikrokapseln bestimmt. Beispiele für feste Kapselkembildner sind feindisperse Fotochemikalien, Herbizide, Pestizide, Agrochemikalien, Pharmaceutica, Pigmente, Farbstoffe, Flammschutzmittel, Katalysatoren, Magnetpartikel und Stabilisatoren. Beispiele für flüssige Kapselkembildner sind Adhesive, Aromastoffe, Parfüme, Tinten und in Wasser dispergierbare Flüssigkeiten wie Öle.

Bei der Herstellung von Fasern von Polymeren aus Triazinderivaten ausgehend von Prepolymeren mit Molmassen-Zahlenmitteln von 200 bis 8000 erfolgt die Faserherstellung aus den hochkonzentrierten Lösungen der Prepolymeren (Feststoffgehalt 35 bis 85 Masse%) durch Zentrifugenspinnen, Fadenziehen, Extrudieren oder Fibrillierungsprozesse, gegebenenfalls nachfolgende Reckung, und Härtung. Beim Extrusionsverfahren wird die Spinnlösung durch eine Düse in eine auf 170 bis 320°C beheizte Atmosphäre (Luft oder Inertgas) gepresst, um die Entfernung der in der Spinnlösung enthaltenen Lösungsmittel und die Härtung der Faser in möglichst kurzer Zeit zu erreichen. Möglich ist ebenfalls die Herstellung von Fäden aus Prepoymeren von Triazinderivaten durch Schmelzspinnen. Die Fasern aus den erfindungsgemässen Polymeren aus Triazinderivaten besitzen gegenüber Fasern aus üblichen Triazinpolymeren wie Melaminharzen oder Guanaminharzen eine verbesserte Elastizität, d.h. eine verbesserte Dehnung bei hoher Festigkeit.

Die Herstellung der geschlossenzelligen Schaumstoffe oder geschlossenzelligen geschäumten Profile aus Polymeren von Triazinderivaten ausgehend von Prepolymeren mit Molmassen-Zahlenmitteln von 200 bis 8000 erfolgt durch Eintrag der Prepolymeren in eine emulgatorfreie wässrige Dispersion von flüchtigen Kohlenwasserstoffen und/oder Inertgasen, die saure Katalysatoren enthält, Austrag und nachfolgende Aushärtung.

Die Herstellung von offenzelligen Schaumstoffen von Polymeren aus Triazinderivaten ausgehend von Prepolymeren mit Molmassen-Zahlenmitteln von 200 bis 8000 erfolgt durch Eintrag der Prepolymeren in eine wässrige Treibmittelemulsion von flüchtigen Kohlenwasserstoffen, Inertgasen und/oder anorganischen Carbonaten, die saure Katalysatoren enthält, Erwärmung auf die Siede- bzw. Zersetzungstemperatur des Treibmittels und Austrag entweder in Formen und Aushärtung zu offenzelligen Schaumstoffen oder durch ein Formwerkzeug und Aushärtung zu offenzelligen geschäumten Profilen.

Die geschlossenzelligen bzw. offenzelligen Schaumstoffe aus den erfindungsgemässen Polymeren aus Triazinderivaten besitzen gegenüber Schaumstoffen aus üblichen Triazinpolymeren wie Melaminharzen oder Guanaminharzen eine verbesserte Zähigkeit.

Bei der Herstellung von Lackharzbeschichtungen aus den erfindungsgemässen Polymeren von Triazinderivaten werden Mischungen aus Prepolymeren mit Molmassen-Zahlenmitteln von 200 bis 8000 unter Zusatz von Pigmenten, Härtern und gegebenenfalls Füllstoffen, Stabilisatoren, Lösungsmitteln sowie Filmbildnem vom Typ Alkydharze, Epoxidharze und/oder Phenolharze rezepturiert, auf Trägermaterialien wie Holz aufgebracht und bei Temperaturen unterhalb 80°C ausgehärtet oder auf metallische Trägermaterialien aufgebracht und bei Temperaturen bis 180°C ausgehärtet.

Bei der Herstellung von Laminaten bzw. Schichtpressstoffen aus den erfindungsgemässen Polymeren von Triazinderivaten werden flächige Trägermaterialien aus organischen oder anorganischen Fasern in Form von Bahnen, Geweben, Matten oder Vliesen mit der wässrigen Lösung bzw. Dispersion von Prepolymeren mit Molmassen-Zahlenmitteln von 200 bis 8000, gegebenenfalls unter Zusatz von Schichtsilikaten, beispielsweise in Tränkanlagen imprägniert und in Trockenkanälen bei Temperaturen bis 130°C getrocknet und als Laminat ausgehärtet oder nach Schneiden und gegebenenfalls Einbringen von Zwischenlagen, z.B. aus Holz, Papier oder Pappe, in Mehretagenpressen zu Schichtpressstofftafeln verpresst. Die verbesserte Zähigkeit von Laminaten ist für die thermische Nachverarbeitbarkeit der Laminate bzw. Schichtpressstoffe von Bedeutung, bei denen bei geringen Biegeradien während der thermischen Nachverarbeitung eine Rissbildung ausgeschlossen werden muss.

Die Erfindung wird durch nachfolgende Beispiele erläutert :

### Beispiel 1

### 1.1 Herstellung der Triazinderivatmischung

In einen 20 I Druckreaktor mit Rührer, absteigendem Kühler und Bodenablassventil werden nach dem Spülen mit Inertgas 12 I über Molsieb getrocknetes Dimethylsulfoxid dosiert. Unter intensivem Rühren erfolgt danach die Zugabe von 1,26 kg Melamin, das teilweise gelöst wird. Zu dieser Suspension wird bei Raumtemperatur 300 ml der Katalysatorlösung aus n-Butyllithium in Cyclohexan (1,6 mol/l) zugetropft. Zur Bildung des Lithium-Melamin-Adduktes ist eine Reaktionszeit von 20 min ausreichend. Nachfolgend werden 1,74 kg Propylenoxid in den Druckreaktor dosiert und der Druckreaktor unter Rühren auf 85°C aufgeheizt, wobei sich ein Reaktorinnendruck von 1,2 bar einstellt. Nach 20 min ist das Melamin vollständig gelöst, und nach einer Reaktionszeit von 10 Std. bei 85°C hat sich eine homogene schwach gelblich gefärbte Lösung gebildet, die durch Abdestillation der Hauptmenge des Cyclohexans und Dimethylsulfoxids bei einem Vacuum von 12 mm Hg auf ein Volumen von 6 I eingeengt und durch Sprühtrocknung getrocknet wird.

Die Ausbeute des Gemischs aus Triazinderivaten beträgt, bezogen auf das eingesetzte Propylenoxid, 92%. Die IR-Analyse ergibt für die Anteile der an den Triazinring gebundenen Hydroxypropylgruppen 35 Mol% Hydroxypropylaminogruppen und 65 Mol% Bis(hydroxypropyl)iminogruppen.

### 1.2 Herstellung des Polymers aus Triazinderivaten

In einen 20 I Rührreaktor mit Kondensator und Bodenablassventil wird unter Inertgasspülung eine Suspension von 2,0 kg Diphenylmethandiisocyanat in 4,5 kg 4-Methylpentanon-2 dosiert und unter starkem Rühren innerhalb 3 Std. eine Lösung von 3,0 kg des Triazinderivatgemischs nach 1.1 in 3 kg Dimethylsulfoxid zugesetzt.

Nach einer Reaktionszeit von 4 Std. bei 115°C besitzt das resultierende Polyurethan-Prepolymer mit Triazinsequenzen ein Molmassen-Zahlenmittel (GPC) von 2850.

### 1.3 Verarbeitung der Lösung des Polyurethan-Prepolymers zu Fasern

Die Lösung des Polyurethan-Prepolymers in dem Lösungsmittelgemisch 4-Methylpentanon/Dimethylsulfoxid nach 1.2 (Feststoffgehalt 40 Masse%), der 2 Masse% Trimellithsäureanhydrid, bezogen auf das Polyurethanprepolymer, als Härter, zugesetzt wurden, wird in einer Laborspinnanlage aus einem auf 115°C beheizten Vorratsgefäss mittels Spinnpumpe durch eine 10^{er}-Lochdüse (Lochdurchmesser 0,1 mm) in einen Trockenspinnschacht, durch den Luft mit einer Geschwindigkeit von 0,03 m/s und einer Temperatur von 120-125°C eingeblasen wird, bei einem Durchsatz von 2,0 g/min und einer Spinngeschwindigkeit von 75 m/min zu Fäden mit einem Einzelfadendurchmesser von 37 µm ersponnen, auf Spulen aufgewickelt und durch 1,5 h Behandlung mit Heissluft bei 235°C auskondensiert und vernetzt.

Die hergestellten Fäden haben eine Reissfestigkeit von 1,6 cN/dtex und eine Bruchdehnung von 34%.

### Beispiel 2

### 2.1 Herstellung der Triazinderivatmischung

In einen 20 I Druckreaktor mit Rührer, absteigendem Kühler und Bodenablassventil werden nach dem Spülen mit Inertgas 13 I über Molsieb getrocknetes Dimethylsulfoxid dosiert. Unter intensivem Rühren erfolgt danach die Zugabe einer Mischung aus 756 g Melamin, 250 g Acetoguanamin und 29 g Dimethylolmelamindibutylether, die teilweise gelöst wird. Zu dieser Suspension wird bei Raumtemperatur 330 ml der Katalysatorlösung aus Isopropyllithium in Cyclohexan (1,5 mol/l) zugetropft. Zur Bildung des Lithium-Adduktes ist eine Reaktionszeit von 20 min ausreichend. Nachfolgend werden 1,16 kg Propylenoxid in den Druckreaktor dosiert und der Druckreaktor unter Rühren auf 85°C aufgeheizt, wobei sich ein Reaktorinnendruck von 1,2 bar einstellt. Nach 15 min ist die Mischung aus Melamin, Acetoguanamin und Dimethylolmelamindibutylether vollständig gelöst, und nach einer Reaktionszeit von 12 Std. bei 85°C hat sich eine homogene schwach gelblich gefärbte Lösung gebildet, die durch Abdestillation der Hauptmenge des Dimethylsulfoxids und Cyclohexans bei einem Vacuum von 12 mm Hg auf ein Volumen von 5 1 eingeengt und durch Sprühtrocknung getrocknet wird.

Die Ausbeute des Gemischs aus Triazinderivaten beträgt, bezogen auf das eingesetzte Propylenoxid, 96%. Die IR-Analyse ergibt für die Anteile der an den Triazinring gebundenen Hydroxypropylgruppen 41 Mol% Hydroxypropylaminogruppen und 59 Mol% Bis(hydroxypropyl)iminogruppen.

### 2.2 Herstellung des Polymers aus Triazinderivaten

Das Gemisch aus Triazinderivaten nach 2.1 wird mit 2,34 kg/h in einen Wemer&Pfleiderer - Doppelschneckenextruder ZSK 30 mit Vacuumentgasung und statischem Mischer, L/D= 42, Temperaturprofil 100/140/165/240/260/260/260/260/240/210°C, dosiert. In die Zone 3 des Extruders wird Tetramethylendiisocyanat mit 1,4 kg/h dosiert, und die Reaktionsmischung nach Vacuumentgasung (Verweilzeit im Extruder und statischem Mischer 12 min) ausgetragen.

Das resultierende Polyurethan mit Kettensequenzen aus Triazinderivaten besitzt einen Schmelzbereich von 220-228°C und ein Molmassen-Zahlenmittel (GPC) von 8,8 x 10⁴.

### 2.3 Spritzgussverarbeitung des Polymers aus Triazinderivaten

Die Herstellung von Normprüfstäben erfolgte mit einer Ferromatic Millacron FM 60 Spritzgussmaschine (Dreizonenschnecke, Schneckenlänge 22 D) bei einer Massetemperatur von 285°C und einer Werkzeugtemperatur von 90°C.

Die Ausprüfung der Eigenschaften (23°C) ergab folgende Ergebnisse:

| | |
|---|---|
| Zugfestigkeit (DIN 53 457 / ISO 527) | 75 MPa |
| Dehnung (DIN 53 457 / ISO 527) | 8,8% |
| Zug-E-Modul (DIN 53 457 / ISO 527) | 2890 MPa |
| Izod-Kerbschlagzähigkeit (ISO 180-1A) | 4,8 kJ/m² |
| Flammwidrigkeit nach UL 94 (1,6 mm) | Klasse V-0 |

### Beispiel 3

### 3.1 Herstellung der Triazinderivatmischung

In einen 20 I Druckreaktor mit Rührer, absteigendem Kühler und Bodenablassventil werden nach dem Spülen mit Inertgas 12 I über Molsieb getrocknetes Dimethylformamid dosiert. Unter intensivem Rühren erfolgt danach die Zugabe einer Mischung aus 1,0 kg Melamin und 490 g Methoxymethylbenzoguanamin, die teilweise gelöst wird. Zu dieser Suspension wird bei Raumtemperatur 500 ml der Katalysatorlösung aus Bortriethyl in n-Heptan (1,9 mol/l) zugetropft. Zur Bildung des Bor- Adduktes ist eine Reaktionszeit von 40 min ausreichend. Nachfolgend werden 1,76 kg Ethylenlenoxid in den Druckreaktor dosiert und der Druckreaktor unter Rühren auf 80°C aufgeheizt, wobei sich ein Reaktorinnendruck von 8 bar einstellt. Nach 30 min ist die Mischung aus Melamin und Methoxymethylbenzoguanamin vollständig gelöst, und nach einer Reaktionszeit von 15 Std. bei 80°C hat sich eine homogene schwach gelblich gefärbte Lösung gebildet, die durch Abdestillation der Hauptmenge des Heptans und des Dimethylformamids bei einem Vacuum von 8 mm Hg auf ein Volumen von 6 I eingeengt und durch Sprühtrocknung getrocknet wird.

Die Ausbeute des Gemischs aus Triazinderivaten beträgt, bezogen auf das eingesetzte Ethylenoxid, 88%. Die IR-Analyse ergibt für die Anteile der an den Triazinring gebundenen Hydroxyethylgruppen 28 Mol% Hydroxyethylaminogruppen und 72 Mol% Bis-(hydroxyethyl)iminogruppen.

### 3.2 Herstellung des Polymers aus Triazinderivaten

Ein 10 I Rührreaktor mit Inertgaseinleitung, absteigendem Kühler und Bodenablass wird mit einer Mischung aus 3,23 kg der Triazinderivatmischung nach 3.1, 2,07 kg Dimethylsebazat und 0,45 kg Polypropylenoxid (Molmasse 450) beschickt und unter Rühren und Inertgasspülung 4,5 Std. auf 175°C erhitzt. Anschliessend wird innerhalb von 4 Std. kontinuierlich der Innendruck auf 0,05 Torr reduziert und nachfolgend die Schmelze 6 Std. bei 215°C/0,05 Torr gerührt. Die Schmelze des oligomeren Polyesters wird auf ein Kühlband aufgegeben und gebrochen.

Der resultierende oligomere Polyester mit Triazinsequenzen besitzt ein Molmassen-Zahlenmittel (GPC) von 3800.

### 3.3 Rezepturierung des oligomeren Polyesters mit Triazinsequenzen zu einer Formmasse und Verarbeitung zu einer Pressplatte

Im beheizbaren Kneter wird eine Mischung aus 3,4 kg gebleichter Sulfitcellulose, 1,1 kg Kreide, 100 g Magnesiumstearat, 50 g Ammoniumperoxidisulfat und 150 g Maleinsäure mit 10 I einer 35% wässrigen Lösung des oligomeren Polyesters nach 3.2 imprägniert, homogenisiert, bei 80°C getrocknet, ausgetragen und granuliert und die Formmassenpartikel in einer beheizbaren Presse bei einer Werkzeugtemperatur von 175°C und einem Pressdruck von 250 bar zu 4 mm - Platten 100 x 100 mm verarbeitet.

### Ausgefräste Prüfstäbe besitzen folgende Eigenschaften:

Zugfestigkeit: 26 MPa Biegefestigkeit: 72 MPa Biege-E-Modul: 6800 MPa
Schlagzähigkeit: 17,0 kJ/m² Kerbschlagzähigkeit: 5,8 kJ/m²

### Beispiel 4

### 4.1 Herstellung des Triazinderivatmischung

In einen 20 I Druckreaktor mit Rührer, absteigendem Kühler und Bodenablassventil werden nach dem Spülen mit Inertgas 12 I über Molsieb getrocknetes Dimethylsulfoxid dosiert. Unter intensivem Rühren erfolgt danach die Zugabe von 1,26 kg Melamin, das teilweise gelöst wird. Zu dieser Suspension wird bei Raumtemperatur 300 ml der Katalysatorlösung aus n-Butyllithium in Cyclohexan (1,6 mol/I) zugetropft. Zur Bildung des Lithium-Melamin-Adduktes ist eine Reaktionszeit von 20 min ausreichend. Nachfolgend werden 3,48 kg Propylenoxid in den Druckreaktor dosiert und der Druckreaktor unter Rühren auf 85°C aufgeheizt, wobei sich ein Reaktorinnendruck von 1,2 bar einstellt. Nach 20 min ist das Melamin vollständig gelöst und nach einer Reaktionszeit von 10 Std. bei 85°C hat sich eine homogene schwach gelblich gefärbte Lösung gebildet, die durch Abdestillation der Hauptmenge des Cyclohexans und Dimethylsulfoxids bei einem Vacuum von 12 mm Hg auf ein Volumen von 6,5 I eingeengt und durch Sprühtrocknung getrocknet wird.

Die Ausbeute des Gemischs aus Triazinderivaten beträgt, bezogen auf das eingesetzte Propylenoxid, 88%. Die IR-Analyse ergibt für die Anteile der an den Triazinring gebundenen Hydroxypropylgruppen 23 Mol% Hydroxypropylaminogruppen und 77 Mol% Bis(hydroxypropyl)iminogruppen.

### 4.2 Herstellung des Polymers aus Triazinderivaten

Das Gemisch aus Triazinderivaten nach 4.1 wird mit 4,74 kg/h in einen Wemer&Pfleiderer - Doppelschneckenextruder ZSK 30 mit Vacuumentgasung und statischem Mischer, L/D= 42, Temperaturprofil 50/90/130/170/210/210/210/210/160/110°C, dosiert. In die Zone 3 des Extruders wird Ethylenglycoldiglycidether (d=1,12, Kp₂=119°C) mit 1,38 kg/h dosiert, und die Reaktionsmischung nach Vacuumentgasung (Verweilzeit im Extruder und statischem Mischer 12 min) ausgetragen und granuliert..

Der resultierende oligomere Polyhydroxyether mit Kettensequenzen aus Triazinderivaten besitzt ein Molmassen-Zahlenmittel (GPC) von 5600.

### 4.3 Herstellung eines Laminats

Mit einer 40% wässrigen Lösung des oligomeren Polyhydroxyethers nach 4.3, die 1,5 Masse%, bezogen auf den Polyhydroxyether, Pyromellithsäure als Härter enthält, wird ein Dekorpapier (Flächenmasse 80 g/m²) und ein Kraftpapier als Kempapier (Flächenmasse 180 g/m²) bei 45°C imprägniert.

Nach Trocknung im Umluftofen bei 140°C auf eine Flüchte von 5,8% besitzt das Dekorpapier einen Harzanteil von 56 Masse% und das Kraftpapier einen Harzanteil von 44 Masse%. Nachfolgend wird eine Schicht des imprägnierten Dekorpapiers mit 3 Lagen Kempapier in einer Collin-Laborpresse mit einem Druck von 90 bar bei 165°C 120 s zusammengepresst.

Zur Prüfung der Elastizität wurde die Nachverformbarkeit des resultierenden Laminats untersucht. Bei Biegung des Laminats um einen auf 160°C aufgeheizten 3 mm Metalldorn trat keine Rissbildung des Laminats auf.

## Patentansprüche

1. Polymere aus Triazinderivaten für Halbzeuge und Formstoffe mit verbesserter Zähigkeit und hoher Flammwidrigkeit und Festigkeit, **dadurch gekennzeichnet, dass** die Polymere aus Triazinderivaten Polymere auf Basis von
A) 60 bis 95 Masse% Triazinderivatmischungen
A1) 20 bis 70 Masse% Triazinderivaten mit Hydroxyalkylaminogruppen der Formel 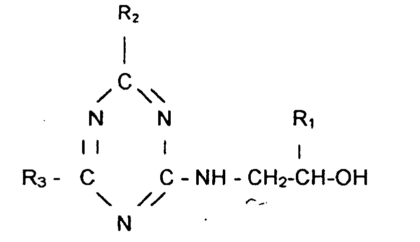
R₁ = H oder C₁-C₄ - Alkyl
R₂ = -H; -OH; C₁-C₄ - Alkyl, -C₆H₅; -NH₂; -NH-CH₂-CHR₁OH; -NH-CH₂-OR₁ oder -N(-CH₂-OR₁)₂,
R₃ = -H; -OH; C₁-C₄ - Alkyl, -C₆H₅; -NH₂; -NH-CH₂-CHR₁-OH; -NH-CH₂-OR₁ oder -N(-CH₂-OR₁)₂,
wobei die Zahl der Hydroxylaminogruppen 1 bis 3 beträgt, und
A2) 80 bis 30 Masse% Triazinderivaten mit Bis(hydroxyalkyl)aminogruppen der Formel 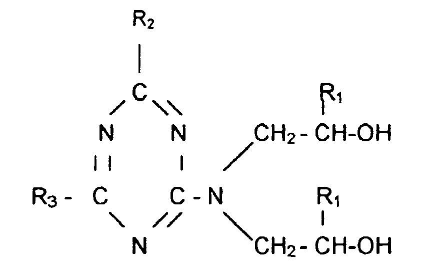
R₁ = H oder C₁-C₄ - Alkyl
R₂ = -H; -OH; C₁-C₄ - Alkyl, -C₆H₅; -NH₂; -NH-CH₂-CHR₁-OH; -N[CH₂-CHR₁-OH]₂, -NH-CH₂-OR₁ oder -N(-CH₂-OR₁)₂,
R₃ = -H; -OH; C₁-C₄ - Alkyl, -C₆H₅; -NH₂; -NH-CH₂-CHR₁-OH; -N[CH₂-CHR₁-OH]_{2,} -NH-CH₂-OR₁ oder -N(-CH₂-OR₁)₂,
wobei die Zahl der Hydroxyalkylgruppen 2 bis 6 beträgt,
B) 5 bis 40 Masse% mehrfunktionellen Verbindungen, bestehend aus
B1) Isocyanaten der Formel R (N = C = O)ₓ, wobei R = C₄ - C₁₈-Alkyl, C₅ - C₈ - Cycloalkyl und/oder C₆ - C₁₅ -Aryl und x = 2; 3; 4 bedeuten, und/oder oligomeren Polyestern bzw. Polyethern mit Isocyanat-Endgruppen und Molmassen von 200 bis 5000, oder
B2) aliphatischen C₂-C₃₆-Dicarbonsäuren, -Dicarbonsäureestem bzw. -Dicarbonsäurechloriden, aliphatischen C₄-C₆-Dicarbonsäureanhydriden und/oder aromatischen mehrbasischen C₈-C₂₃-Carbonsäuren, -Carbonsäureestern, -Carbonsäurechloriden bzw. -Carbonsäureanhydriden, oder
B3) aliphatischen C₈-C₂₅ - bzw. aromatischen C₁₂-C₂₈ - Di- und/oder Triglycidylverbindungen,
und gegebenenfalls
C) 1 bis 20 Masse% weiteren funktionellen Verbindungen, bestehend aus
C1) C₂ - C₁₈-aliphatischen -, C₅- C₈-cycloaliphatischen und/oder C₆ - C₁₅-aromatischen Dihydroxyverbindungen, und/oder
C2) Polyalkylenglycolen mit Molmassen von 200 bis 6000, und/oder
C3) C₁-C₈-aliphatischen Aldehyden,

2. Polymere aus Triazinderivaten nach Anspruch 1, **dadurch gekennzeichnet, dass** die Polymere Prepolymere mit Molmassen-Zahlenmitteln von 200 bis 8000 sind.

3. Polymere aus Triazinderivaten nach Anspruch 1, **dadurch gekennzeichnet, dass** die Polymere vernetzte duroplastische Polymere sind.

4. Polymere aus Triazinderivaten nach Anspruch 1, **dadurch gekennzeichnet, dass** die Polymere thermoplastische Polymere mit Molmassen-Zahlenmitteln von 8 x 10³ bis 10⁷ sind.

5. Polymere aus Triazinderivaten nach Anspruch 1, **dadurch gekennzeichnet, dass** die Triazinderivatmischungen A) aus A1) Hydroxyalkylaminogruppen substituiertem Triazin mit einem Molverhältnis Triazin/Hydroxyalkylaminogruppen 1:1 bis 1 : 2,5 , und A2) Bis(hydroxyalkyl)iminogruppen und Hydroxyalkylaminogruppen substituiertem Triazin mit einem Molverhältnis Triazin/Hydroxyalkylgruppen 1 : 2,5 bis 1 : 5,5 , bestehen.

6. Polymere aus Triazinderivaten nach Anspruch 1, **dadurch gekennzeichnet, dass** die Diisocyanate B1) als mehrfunktionelle Verbindungen B) Tetramethylendiisocyanat, Hexamethylendiisocyanat, Toluylendiisocyanat und/oder Diphenylmethandiisocyanat sind.

7. Polymere aus Triazinderivaten nach Anspruch 1, **dadurch gekennzeichnet, dass** die Dicarbonsäureanhydride B2) als bifunktionelle Verbindungen B) Bernsteinsäureanhydrid, Maleinsäureanhydrid, Glutarsäureanhydrid, Phthalsäureanhydrid und/oder Norbornendicarbonsäureanhydrid sind.

8. Verfahren zur Herstellung von Polymeren aus Triazinderivaten für Halbzeuge und Formstoffe mit verbesserter Zähigkeit und hoher Flammwidrigkeit und Festigkeit, **dadurch gekennzeichnet, dass** bei einem Schmelzeverfahren in kontinuierlichen Knetern Mischungen aus
A) 60 bis 95 Masse% Triazinderivatmischungen
A1) 20 bis 70 Masse% Triazinderivaten mit Hydroxyalkylaminogruppen der Formel 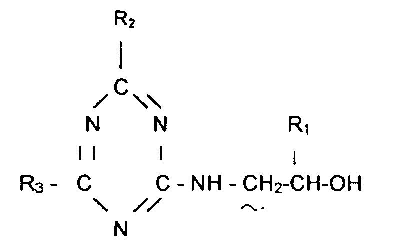
R₁ = H oder C₁-C₄ - Alkyl
R₂ = -H; -OH; C₁-C₄ - Alkyl, -C₆H₅; -NH₂; -NH-CH₂-CHR₁-OH; -NH-CH₂-OR, oder -N(-CH₂-OR₁)₂,
R₃ = -H; -OH; C₁-C₄ - Alkyl, -C₆H₅; -NH₂; -NH-CH₂-CHR₁-OH; -NH-CH₂-OR₁ oder -N(-CH₂-ORᵢ)₂.
wobei die Zahl der Hydroxylaminogruppen 1 bis 3 beträgt, und
A2) 80 bis 30 Masse% Triazinderivaten mit Bis(hydroxyalkyl)aminogruppen der Formel 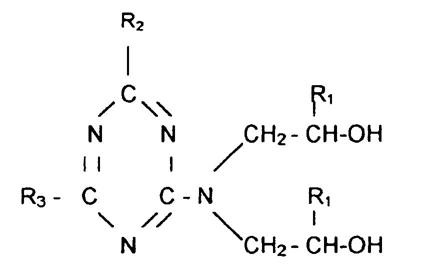
R₁ = H oder C₁-C₄ - Alkyl
R₂ = -H; -OH; C₁-C₄ - Alkyl, -C₆H₅; -NH₂; -NH-CH₂-CHR₁-OH; -N[CH₂-CHR₁-OH]₂, -NH-CH₂-OR₁ oder -N(-CH₂-OR₁)₂,
R₃ = -H; -OH; C₁-C₄ - Alkyl, -C₆H₅; -NH₂; -NH-CH₂-CHR₁-OH; -N[CH₂-CHR₁-OH]₂, -NH-CH₂-OR₁ oder -N(-CH₂-OR₁)₂,
wobei die Zahl der Hydroxyalkylgruppen 2 bis 6 beträgt,
B) 5 bis 40 Masse% mehrfunktionellen Verbindungen, bestehend aus
B1) Isocyanaten der Formel R (N = C = O)ₓ, wobei R = C₄ - C₁₈-Alkyl, C₅ - C₈ - Cycloalkyl und/oder C₆ - C₁₅ -Aryl und x = 2; 3; 4 bedeuten, und/oder oligomeren Polyestern bzw. Polyethern mit Isocyanat-Endgruppen und Molmassen von 200 bis 5000, oder
B2) aliphatischen C₂-C₃₆-Dicarbonsäuren, -Dicarbonsäureestem bzw. -Dicarbonsäurechloriden, aliphatischen C₄-C₆-Dicarbonsäureanhydriden und/oder aromatischen mehrbasischen C₈-C₂₃-Carbonsäuren, -Carbonsäureestern, -Carbonsäurechloriden bzw. -Carbonsäureanhydriden, oder
B3) aliphatischen C₈-C₂₅ - bzw. aromatischen C₁₂-C₂₈ - Di- und/oder Triglycidylverbindungen,
und gegebenenfalls
C) 1 bis 20 Masse% weiteren funktionellen Verbindungen, bestehend aus
C1) C₂ - C₁₈-aliphatischen -, C₅**-** C₈-cycloaliphatischen und/oder C₆ - C₁₅-aromatischen
Dihydroxyverbindungen, und/oder
C2) Polyalkylenglycolen mit Molmassen von 200 bis 6000, und/oder
C3) C₁-C₈-aliphatischen Aldehyden,
bei Temperaturen von 160 bis 280°C aufgeschmolzen, bei einer Verweilzeit von 5 bis 20 min umgesetzt, vacuumentgast, ausgetragen und granuliert werden, oder, gegebenenfalls unter Zusatz saurer Katalysatoren, durch ein Formwerkzeug ausgetragen und als Profil, Rohr oder Platte ausgeformt werden, wobei die bifunktionellen Verbindungen B) und die weiteren funktionellen Verbindungen C) mit den Gemischen A) vor der Dosierung in den kontinuierlichen Kneter vorgemischt werden können oder die bifunktionellen Verbindungen B) und die weiteren funktionellen Verbindungen C) nach Aufschmelzen der Gemische A) in die Schmelze von A) in den kontinuierlichen Kneter dosiert werden.

9. Verfahren zur Herstellung von Polymeren aus Triazinderivaten für Halbzeuge und Formstoffe mit verbesserter Zähigkeit und hoher Flammwidrigkeit und Festigkeit, **dadurch gekennzeichnet, dass** in Rührreaktoren mit Bodenablass, gegebenenfalls Azeotropabscheider und Kondensator, Dispersionen in C₅-C₁₂-Kohlenwasserstoffen und/oder C₃-C₁₂-Ketonen oder Lösungen in Dimethylsulfoxid, Dimethylformamid und/oder Dimethylacetamid mit einem Feststoffgehalt von 5 bis 70 Masse% aus
A) 60 bis 95 Masse% Triazinderivatmischungen
A1) 20 bis 70 Masse% Triazinderivaten mit Hydroxyalkylaminogruppen der Formel 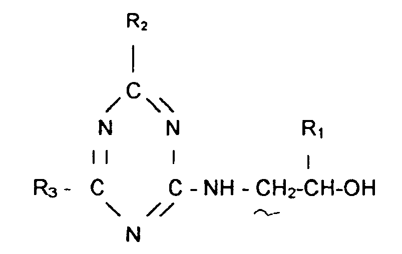
R₁ = H oder C₁-C₄ - Alkyl
R₂ = -H; -OH; C₁-C₄ - Alkyl, -C₆H₅; -NH₂; -NH-CH₂-CHR₁-OH; -NH-CH₂OR₁ oder -N(-CH₂-OR₁)₂,
R₃ = -H; -OH; C₁-C₄ - Alkyl, -C₆H₅; -NH₂; -NH-CH₂-CHR₁-OH; -NH-CH₂-OR₁ oder -N(-CH₂-OR₁)₂,
wobei die Zahl der Hydroxylaminogruppen 1 bis 3 beträgt, und
A2) 80 bis 30 Masse% Triazinderivaten mit Bis(hydroxyalkyl)aminogruppen der Formel 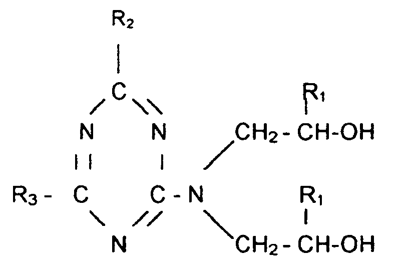
R₁ = H oder C₁-C₄ - Alkyl
R₂ = -H; -OH; C₁-C₄ - Alkyl, -C₆H₅; -NH₂; -NH-CH₂-CHR₁-OH; -N[CH₂-CHR₁-OH]₂, -NH-CH₂-OR₁ oder -N(-CH₂-OR₁)₂,
R₃ = -H; -OH; C₁-C₄ - Alkyl, -C₆H₅; -NH₂; -NH-CH₂-CHR₁-OH; -N[CH₂-CHR₁-OH]₂, -NH-CH₂-OR₁ oder -N(-CH₂-OR₁)₂,
wobei die Zahl der Hydroxyalkylgruppen 2 bis 6 beträgt,
B) 5 bis 40 Masse% mehrfunktionellen Verbindungen, bestehend aus
B1) Isocyanaten der Formel R (N = C = O)ₓ, wobei R = C₄ - C₁₈-Alkyl, C₅ - C₈ - Cycloalkyl und/oder C₆ - C₁₅ -Aryl und x = 2; 3; 4 bedeuten, und/oder oligomeren Polyestern bzw. Polyethern mit Isocyanat-Endgruppen und Molmassen von 200 bis 5000, oder
B2) aliphatischen C₂-C₃₆-Dicarbonsäuren, -Dicarbonsäureestem bzw. -Dicarbonsäurechloriden, aliphatischen C₄-C₆-Dicarbonsäureanhydriden und/oder aromatischen mehrbasischen C₈-C₂₃-Carbonsäuren, -Carbonsäureestern, -Carbonsäurechloriden bzw. -Carbonsäureanhydriden, oder
B3) aliphatischen C₈-C₂₅ - bzw. aromatischen C₁₂-C₂₈ - Di- und/oder Triglycidylverbindungen,
und gegebenenfalls
C) 1 bis 20 Masse% weiteren funktionellen Verbindungen, bestehend aus
C1) C₂ - C₁₈-aliphatischen -, C₅- C₈-cycloaliphatischen und/oder C₆ - C₁₅-aromatischen Dihydroxyverbindungen, und/oder
C2) Polyalkylenglycolen mit Molmassen von 200 bis 6000, und/oder
C3) C₁-C₈-aliphatischen Aldehyden,
bei Temperaturen von 50 bis 150°C, Drücken von 1 bis 15 bar und Verweilzeiten von 40 min bis 12 Std. homogenisiert und umgesetzt werden, und, gegebenenfalls nach destillativer Einengung, die polymeren Reaktionsprodukte ausgetragen und durch Sprühtrocknung oder nach Filtration getrocknet und gegebenenfalls die Umsetzung in einer zweiten Reaktionsstufe nach Aufschmelzen im kontinuierlichen Kneter bei Temperaturen von 160 bis 280°C weitergeführt, und die Reaktionsprodukte entgast, ausgetragen und granuliert werden, wobei in Abhängigkeit von der Reaktionstemperatur und der Reaktivität der Reaktanden die bifunktionellen Verbindungen B) und die weiteren funktionellen Verbindungen C) vollständig oder portionsweise bzw. kontinuierlich den Gemischen A) im Rührreaktor zugesetzt werden.

10. Verwendung von Polymeren aus Triazinderivaten nach einem oder mehreren der Ansprüche 1 bis 7 zur Herstellung von nichtvernetzten oder vernetzten Press- bzw. Spritzgusserzeugnissen, für Anwendungen in der Elektrotechnik und Elektronik, zur Herstellung von Folien, Fasern, Rohren, Platten, Hohlkörpern, von Feststoffe oder Flüssigkeiten enthaltenden Mikrokapseln für fotoempfindliche und druckempfindliche Foto- und Kopierpapiere sowie in der Pharmazie und Agrochemie, von Schaumstoffen zur Wärme- und Schalldämmung im Bauwesen und in der Fahrzeugindustrie, von Beschichtungen in der Fahrzeug-, Geräte- und Möbelindustrie, von Schichtpressstoffen für Anwendungen im Bauwesen und in der Möbelindustrie und von imprägnierten flächigen Trägermaterialien, insbesondere in Form von imprägnierten flächigen Trägermaterialien in der Textilindustrie und Papierindustrie.

## Claims

1. Polymers made from triazine derivatives for semi-finished products and moulded materials with improved toughness and high flame resistance and strength, **characterized in that** the polymers made from the triazine derivatives are polymers based on
A) 60 to 95% by weight of triazine derivative mixtures
A1) 20 to 70% by weight of triazine derivatives with hydroxyalkylamino groups of the formula 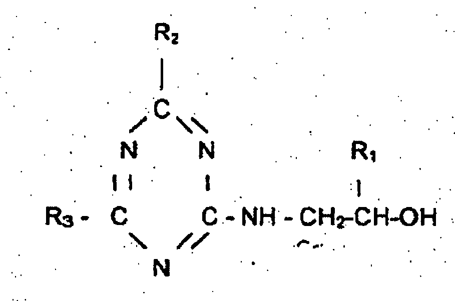
R₁ = H or C₁-C₄ alkyl
R₂ = -H; -OH; C₁-C₄ alkyl, -C₆H₅; -NH₂; -NH-CH₂-CHR₁-OH; -NH-CH₂-OR₁ or -N(-CH₂-OR₁)₂,
R₃ = -H; -OH; C₁-C₄ alkyl, -C₆H₅; -NH₂; -NH-CH₂-CHR₁-OH; -NH-CH₂-OR₁ or -N(-CH₂-OR₁)₂,
wherein the number of hydroxyalkylamino groups is 1 to 3,
and
A2) 80 to 30% by weight of triazine derivatives with bishydroxyalkylamino groups of the formula 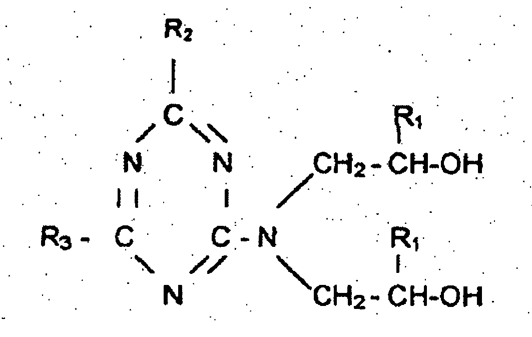
R₁ = H or C₁-C₄ alkyl
R₂ = -H; -OH; C₁-C₄ alkyl, -C₆H₅; -NH₂; -NH-CH₂-CHR₁-OH; -N[CH₂-CHR₁-OH]₂, -NH-CH₂-OR₁ or -N(-CH₂-OR₁)₂,
R₃ = -H; -OH; C₁-C₄ alkyl, -C₆H₅; -NH₂; -NH-CH₂-CHR₁-OH; -N [CH₂-CHR₁-OH] ₂, -NH-CH₂-OR₁ or -N(-CH₂-OR₁)₂,
wherein the number of hydroxyalkyl groups is 2 to 6,
B) 5 to 40% by weight of polyfunctional compounds consisting of
B1) isocyanates of the formula R(N=C=O)ₓ, where R = C₄-C₁₈ alkyl,C₅-C₈ cycloalkyl and/or C₆-C₁₅ aryl and x = 2; 3; 4, and/or oligomeric polyesters or polyethers with isocyanate end groups and molar masses in the range from 200 to 5000,
or
B2) aliphatic C₂-C₃₆ dicarboxylic acids, 1 dicarboxylic acid esters or dicarboxylic acid chlorides, aliphatic C₄-C₆ dicarboxylic acid anhydrides and/or aromatic polybasic C₈-C₂₃ carboxylic acids, carboxylic acid esters, carboxylic acid chlorides or carboxylic acid anhydrides,
or
B3) aliphatic C₈-C₂₅ or aromatic C₁₂-C₂₈ di- and/or triglycidyl compounds,
and optionally
C) 1 to 20% by weight of further functional compounds consisting of
C1) C₂-C₁₈ aliphatic, C₅-C₈ cycloaliphatic and/or C₆-C₁₅ aromatic dihydroxy compounds,
and/or
C2) polyalkylene glycols having molar masses in the range from 200 to 6000, and/or
C3) C₁-C₈ aliphatic aldehydes.

2. Polymers made from triazine derivatives according to Claim 1, **characterized in that** the polymers are prepolymers having number average molar masses in the range from 200 to 8000.

3. Polymers made from triazine derivatives according to Claim 1, **characterized in that** the polymers are crosslinked thermosetting polymers.

4. Polymers made from triazine derivatives according to Claim 1, **characterized in that** the polymers are thermoplastic polymers having number-average molar masses in the range from 8 × 10³ to 10⁷.

5. Polymers made from triazine derivatives according to Claim 1, **characterized in that** the triazine derivative mixtures A) consist of
A1) hydroxyalkylamino-substituted triazine having a molar ratio of triazine/hydroxyalkylamino groups in the range from 1:1 to 1:2.5, and
A2) bis(hydroxyalkyl)amino- and hydroxyalkylamino-substituted triazine having a molar ratio of triazine/hydroxyalkyl groups in the range from 1:2.5 to 1:5.5.

6. Polymers made from triazine derivatives according to Claim 1, **characterized in that** the diisocyanates B1) as polyfunctional compounds B) are tetramethylene diisocyanate, hexamethylene diisocyanate, toluylene diisocyanate and/or diphenylmethane diisocyanate.

7. Polymers made from triazine derivatives according to Claim 1, **characterized in that** the dicarboxylic anhydrides B2) as bifunctional compounds B) are succinic anhydride, maleic anhydride, glutaric anhydride, phthalic anhydride and/or norbornene-dicarboxylic anhydride.

8. Process for producing polymers made from triazine derivatives for semi-finished products and moulded materials with improved toughness and high flame resistance and strength, **characterized in that** in a melt process in continuous kneaders mixtures of
A) 60 to 95% by weight of triazine derivative mixtures
A1) 20 to 70% by weight of triazine derivatives with hydroxyalkylamino groups of the formula 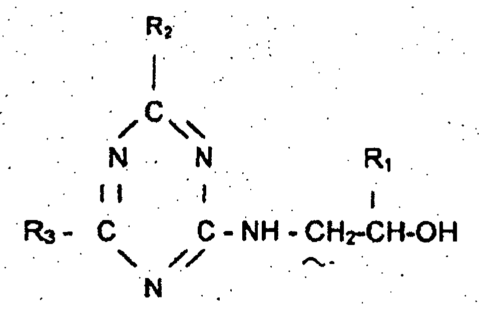
R₁ = H or C₁-C₄ alkyl
R₂ = -H; -OH; C₁-C₄ alkyl, -C₆H₅; -NH₂; -NH-CH₂-CHR₁-OH; -NH-CH₂-OR₁ or -N(-CH₂-ORᵢ)₂,
R₃ = -H; -OH; C₁-C₄ alkyl, -C₆H₅; -NH₂; -NH-CH₂CHR₁-OH; -NH-CH₂-OR₁ or -N(-CH₂-OR₁)₂,
wherein the number of hydroxyalkylamino groups is 1 to 3,
and
A2) 80 to 30% by weight of triazine derivatives with bishydroxyalkylamino groups of the formula 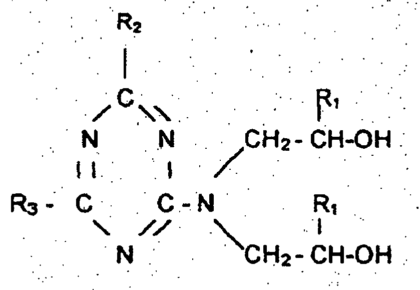
R₁ = H or C₁-C₄ alkyl
R₂ = -H; -OH; C₁-C₄ alkyl, -C₆H₅; -NH₂; -NH-CH₂-CHR₁-OH; -N[CH₂-CHR₁-OH]₂, -NH-CH₂-OR₁ or -N(-CH₂-OR₁)₂,
R₃ = -H; -OH; C₁-C₄ alkyl, -C₆H₅; -NH₂; -NH-CH₂-CHR₁-OH; -N[CH₂-CHR₁-OH]₂, -NH-CH₂-OR₁ or -N(-CH₂-OR₁)₂,
wherein the number of hydroxyalkyl groups is 2 to 6,
B) 5 to 40% by weight of polyfunctional compounds consisting of
B1) isocyanates of the formula R(N=C=O)ₓ, where R = C₄-C₁₈ alkyl, C₅-C₈ cycloalkyl and/or C₆-C₁₅ aryl and x = 2; 3; 4, and/or oligomeric polyesters or polyethers with isocyanate end groups and molar masses in the range from 200 to 5000,
or
B2) aliphatic C₂-C₃₆ dicarboxylic acids, dicarboxylic acid esters or dicarboxylic acid chlorides, aliphatic C₄-C₆ dicarboxylic acid anhydrides and/or aromatic polybasic C₈-C₂₃ carboxylic acids, carboxylic acid esters, carboxylic acid chlorides or carboxylic acid anhydrides,
or
B3) aliphatic C₈-C₂₅ or aromatic C₁₂-C₂₈ di- and/or triglycidyl compounds,
and optionally
C) 1 to 20% by weight of further functional compounds consisting of
C1) C₂-C₁₈ aliphatic, C₅-C₈ cycloaliphatic and/or C₆-C₁₅ aromatic dihydroxy compounds, and/or
C2) polyalkylene glycols having molar masses in the range from 200 to 6000, and/or
C3) C₁-C₈ aliphatic aldehydes,
are melted at temperatures of 160 to 280°C, reacted in the course of a dwell time of 5 to 20 min, vacuum degassed, discharged and granulated, or if appropriate with the addition of acidic catalysts, are discharged through a moulding tool and moulded as profile, pipe or sheet, wherein the bifunctional compounds B) and the further functional compounds C) can be premixed with the mixtures A) prior to the metering into the continuous kneader, or the bifunctional compounds B) and the further functional compounds C) are metered into the melt of A) into the continuous kneader after the mixtures A) have melted.

9. Process for producing polymers made from triazine derivatives for semi-finished products and moulding materials with improved toughness and high flame resistance and strength, **characterized in that** dispersions in C₅-C₁₂ hydrocarbons and/or C₃-C₁₂ ketones or solutions in dimethyl sulfoxide, dimethylformamide and/or dimethylacetamide having a solids content of 5 to 70% by weight consisting of
A) 60 to 95% by weight of triazine derivative mixtures
A1) 20 to 70% by weight of triazine derivatives with hydroxyalkylamino groups of the formula 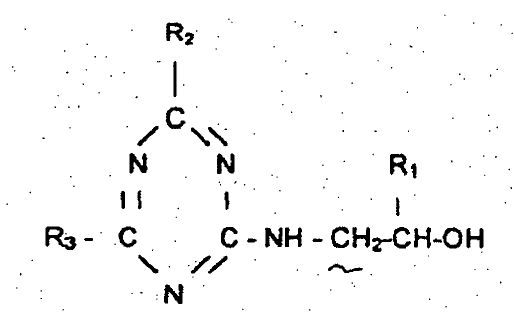
R₁ = H or C₁-C₄ alkyl
R₂ = -H; -OH; C₁-C₄ alkyl, -C₆H₅; -NH₂; -NH-CH₂-CHR₁-OH; -NH-CH₂-OR₁ or -N(-CH₂-OR₁)₂,
R₃ = -H; -OH; C₁-C₄ alkyl, -C₆H5; -NH₂; -NH-CH₂-CHR₁-OH; -NH-CH₂-OR₁ or -N(-CH₂-OR₁)₂,
wherein the number of hydroxyalkylamino groups is 1 to 3,
A2) 80 to 30% by weight of triazine derivatives with bishydroxyalkylamino groups of the formula 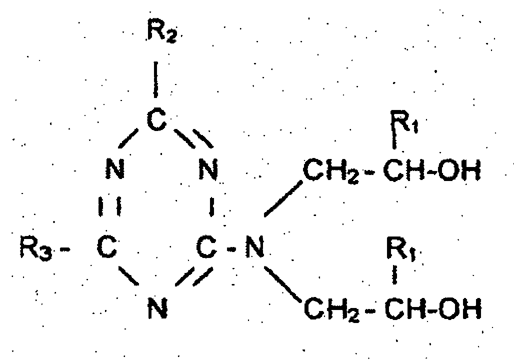
R₁ = H or C₁-C₄ alkyl
R₂ = -H; -OH; C₁-C₄ alkyl, -C₆H₅; -NH₂; -NH-CH₂CHR₁-OH; -N[CH₂-CHR₁-OH]₂, -NH-CH₂-OR₁ or -N(-CH₂-OR₁)₂,
R₃ = -H; -OH; C₁-C₄ alkyl, -C₆H₅; -NH₂; -NH-CH₂-CHR₁-OH; -N[CH₂-CHR₁-OH]₂, -NH-CH₂-OR₁ or -N(-CH₂-OR₁)₂,
wherein the number of hydroxyalkyl groups is 2 to 6,
B) 5 to 40% by weight of polyfunctional compounds consisting of
B1) isocyanates of the formula R(N=C=O)ₓ, where R = C₄-C₁₈ alkyl, C₅-C₈ cycloalkyl and/or C₆-C₁₅ aryl and x = 2; 3; 4, and/or oligomeric polyesters or polyethers with isocyanate end groups and molar masses in the range from 200 to 5000,
or
B2) aliphatic C₂-C₃₆ dicarboxylic acids, dicarboxylic acid esters or dicarboxylic acid chlorides, aliphatic C₄-C₆ dicarboxylic acid anhydrides and/or aromatic polybasic C₈-C₂₃ carboxylic acids, carboxylic acid esters, carboxylic acid chlorides or carboxylic acid anhydrides,
or
B3) aliphatic C₈-C₂₅ or aromatic C₁₂-C₂₈ di- and/or triglycidyl compounds,
and optionally
C) 1 to 20% by weight of further functional compounds consisting of
C1) C₂-C₁₈ aliphatic, C₅-C₈ cycloaliphatic and/or C₆-C₁₅ aromatic dihydroxy compounds,
and/or
C2) polyalkylene glycols having molar masses in the range from 200 to 6000, and/or
C3) C₁-C₈ aliphatic aldehydes,
are homogenized and reacted in stirred tanks with bottom outlet, optional azeotrope separators and condensers at temperatures of 50 to 150°C, pressures of 1 to 15 bar and dwell times of 40 min to 12 h and, if appropriate after distillative concentrating, the polymeric reaction products are discharged and dried by spray drying or after filtering and if appropriate the reaction is continued in a second reaction stage after melting in the continuous kneader at temperatures of 160 to 280°C, and the reaction products are degassed, discharged and granulated, wherein depending on the reaction temperature and the reactivity of the reactants the bifunctional compounds B) and the further functional compounds C) are added to the mixtures A) in the stirred reactor either at once, in portions or continuously.

10. Use of polymers made from triazine derivatives according to one or more of Claims 1 to 7 for producing uncured or crosslinked compression moulded or injection moulded products, for uses in electrical engineering and electronics, for producing films, fibres, pipes, plates, hollow bodies, solids- or liquids-containing microcapsules for photosensitive and pressure-sensitive photographic and copying papers and also in pharmacy and agrochemistry, of foams for heat and sound insulation in building construction and in the vehicle industry, of coatings in the vehicle, appliances and furniture industry, of laminates for uses in building construction and in the furniture industry and of impregnated flat-shaped carrier materials, especially in the form of impregnated flat-shaped carrier materials in the textile industry and paper industry.

## Revendications

1. Polymères de dérivés triaziniques pour produits semi-finis et substances de moulage avec une meilleure ténacité et une résistance élevée aux flammes et une résistance élevée, **caractérisés en ce que** les polymères sont constitués par des dérivés triaziniques à base de
A) 60 à 95% en masse de mélanges de dérivés triaziniques de
A1) 20 à 70% en masse de dérivés triaziniques avec des groupes hydroxyalkylamino de formule 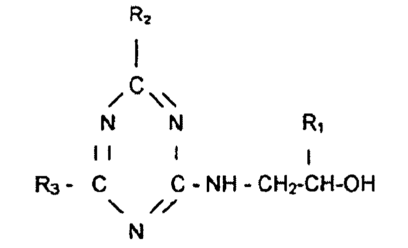
R₁ = H ou C₁-C₄-alkyle
R₂ = -H ; -OH ; C₁-C₄-alkyle ; -C₆H₅ ; -NH₂ ; -NH-CH₂-CHR₁-OH ; -NH-CH₂-OR₁ ou -N(-CH₂-OR₁)₂,
R₃ ₌ -H ; -OH ; C₁-C₄-alkyle ; -C₆H₅ ; -NH₂ ; -NH-CH₂-CHR₁-OH ; -NH-CH₂-OR₁ ou -N(-CH₂-OR₁)₂,
le nombre de groupes hydroxyalkylamino étant de 1 à 3, et
A2) 80 à 30% en masse de dérivés triaziniques avec des groupes bis(hydroxyalkyl)amino de formule 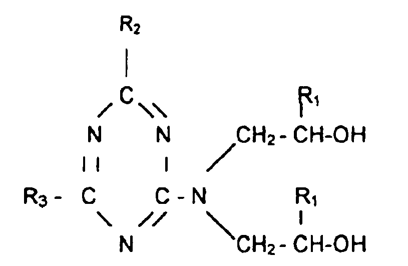
R¹ = H ou C₁-C₄-alkyle
R₂ = -H ; -OH ; C₁-C₄-alkyle ; -C₆H₅ ; -NH₂ ; -NH-CH₂-CHR₁-OH ; -N[CH₂-CHR₁-OH]₂ ; -NH-CH₂-OR₁ ou -N(-CH₂-OR₁)₂,
R₃ = -H ; -OH ; C₁-C₄-alkyle ; -C₆H₅ ; -NH₂ ; -NH-CH₂-CHR₁-OH ; -N[CH₂-CHR₁-OH]₂ ; ; -NH-CH₂-OR₁ ou -N(-CH₂-OR₁)₂,
le nombre de groupes hydroxyamino étant de 2 à 6, et
B) 5 à 40% en masse de composés multifonctionnels, constitués par
B1) des isocyanates de formule R (N ₌ C = O)ₓ, où R = C₄-C₁₈-alkyle, C₅-C₈-cycloalkyle et/ou C₆-C₁₅-aryle et x = 2 ; 3 ; 4, et/ou des polyesters ou des polyéthers oligomères avec des groupes terminaux de type isocyanate et des masses molaires de 200 à 5000, ou
B2) des acides dicarboxyliques aliphatiques en C₂-C₃₆, des esters d'acides dicarboxyliques aliphatiques en C₂-C₃₆ ou des chlorures d'acides dicarboxyliques aliphatiques en C₂-C₃₆, des anhydrides d'acides dicarboxyliques aliphatiques en C₄-C₆ et/ou des acides carboxyliques aromatiques, polybasiques en C₈-C₂₃, des esters d'acides carboxyliques aromatiques, polybasiques en C₈-C₂₃, des chlorures d'acides carboxyliques aromatiques, polybasiques en C₈-C₂₃, ou des anhydrides d'acides carboxyliques aromatiques, polybasiques en C₈-C₂₃, ou
B3) des composés diglycidyliques et/ou triglycidyliques aliphatiques en C₈-C₂₅ ou aromatiques en C₁₂-C₂₈,
et le cas échéant
C) 1 à 20% en masse d'autres composés fonctionnels, constitués par
C1) des composés dihydroxy aliphatiques en C₂-C₁₈, cycloaliphatiques en C₅-C₈ et/ou aromatiques en C₆-C₁₅, et/ou
C2) des polyalkylèneglycols présentant des masses molaires de 200 à 6000, et/ou
C3) des aldéhydes aliphatiques en C₁-C₈.

2. Polymères de dérivés triaziniques selon la revendication 1, **caractérisés en ce que** les polymères sont des prépolymères présentant des masses molaires numériques moyennes de 200 à 8000.

3. Polymères de dérivés triaziniques selon la revendication 1, **caractérisés en ce que** les polymères sont des polymères thermodurcissables réticulés.

4. Polymères de dérivés triaziniques selon la revendication 1, **caractérisés en ce que** les polymères sont des polymères thermoplastiques présentant des masses molaires numériques moyennes de 8 x 10³ à 10⁷.

5. Polymères de dérivés triaziniques selon la revendication 1, **caractérisés en ce que** les mélanges de dérivés triaziniques A) sont constitués par
A1) une triazine substituée par des groupes hydroxyalkylamino avec un rapport molaire triazine/groupes hydroxyalkylamino de 1:1 à 1:2,5, et
A2) une triazine substituée par des groupes bis(hydroxyalkyl)amino et des groupes hydroxyalkylamino avec un rapport molaire triazine/groupes hydroxyalkylamino de 1:2,5 à 1:5,5.

6. Polymères de dérivés triaziniques selon la revendication 1, **caractérisés en ce que** les diisocyanates B1), en tant que composés polyfonctionnels B), sont le tétraméthylènediisocyanate, l'hexaméthylènediisocyanate, le toluylènediisocyanate et/ou le diphénylméthanediisocyanate.

7. Polymères de dérivés triaziniques selon la revendication 1, **caractérisés en ce que** les anhydrides d'acide dicarboxylique B2), en tant que composés difonctionnels B), sont l'anhydride de l'acide succinique, l'anhydride de l'acide maléique, l'anhydride de l'acide glutarique, l'anhydride de l'acide phtalique et/ou l'anhydride de l'acide norbornènedicarboxylique.

8. Procédé pour la préparation de polymères de dérivés triaziniques pour produits semi-finis et substances de moulage avec une meilleure ténacité et une résistance élevée aux flammes et une résistance élevée, **caractérisé en ce que**, dans un procédé en masse fondue, dans des malaxeurs continus, des mélanges constitués par
A) 60 à 95% en masse de mélanges de dérivés triaziniques de
A1) 20 à 70% en masse de dérivés triaziniques avec des groupes hydroxyalkylamino de formule 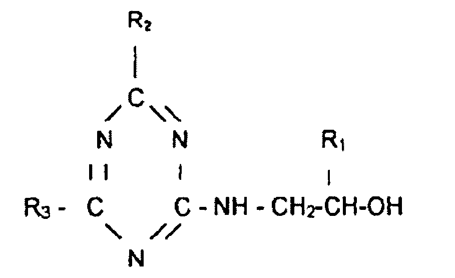
R₁ = H ou C₁-C₄-alkyle
R₂ = -H ; -OH ; C₁-C₄-alkyle ; -C₆H₅ ; -NH₂ ; -NH-CH₂-CHR₁ - OH ; -NH-CH₂-OR, ou -N(-CH₂-OR₁)₂,
R₃ = -H ; -OH ; C₁-C₄-alkyle ; -C₆H₅ ; -NH₂ ; -NH-CH₂-CHR₁-OH ; -NH-CH₂-OR₁ ou N(-CH₂-OR₁)₂,
le nombre de groupes hydroxyamino étant de 1 à 3, et
A2) 80 à 30% en masse de dérivés triaziniques avec des groupes bis(hydroxyalkyl)amino de formule 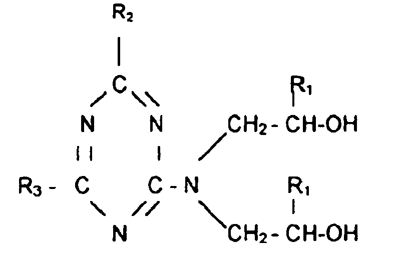
R₁ = H ou C₁-C₄-alkyle
R₂ = -H ; -OH ; C₁-C₄-alkyle ; -C₆H₅ ;-NH₂ ; -NH-CH₂-CHR₁-OH ;-N[CH₂-CHR₁-OH]₂ -NH-CH₂-OR₁ou -N(-CH₂-OR₁)₂,
R₃ = -H ; -OH ; C₁-C₄-alkyle ; -C₆H₅ ; -NH₂ ; -NH-CH₂-CHR₁-OH ; -N[CH₂-CHR₁-OH]₂, -NH-CH₂-OR₁ou -N(-CH₂-OR₁)₂,
le nombre de groupes hydroxyamino étant de 2 à 6,
B) 5 à 40% en masse de composés multifonctionnels, constitués par
B1) des isocyanates de formule R (N = C = O)ₓ, où R = C₄-C₁₈-akyle, C₅-C₈-cycloalkyle et/ou C₆-C₁₅-aryle et x = 2 ; 3 ; 4, et/ou des polyesters ou des polyéthers oligomères avec des groupes terminaux de type isocyanate et des masses molaires de 200 à 5000, ou
B2) des acides dicarboxyliques aliphatiques en C₂-C₃₆, des esters d'acides dicarboxyliques aliphatiques en C₂-C₃₆ ou des chlorures d'acides dicarboxyliques aliphatiques en C₂-C₃₆, des anhydrides d'acides dicarboxyliques aliphatiques en C₄-C₆ et/ou des acides carboxyliques aromatiques, polybasiques en C₈-C₂₃, des esters d'acides carboxyliques aromatiques, polybasiques en C₈-C₂₃, des chlorures d'acides carboxyliques aromatiques, polybasiques en C₈-C₂₃, ou des anhydrides d'acides carboxyliques aromatiques, polybasiques en C₈-C₂₃, ou
B3) des composés diglycidyliques et/ou triglycidyliques aliphatiques en C₈-C₂₅ ou aromatiques en C₁₂-C₂₈,
et le cas échéant
C) 1 à 20% en masse d'autres composés fonctionnels, constitués par
C1) des composés dihydroxy aliphatiques en C₂-C₁₈, cycloaliphatiques en C₅-C₈ et/ou aromatiques en C₆-C₁₅, et/ou
C2) des polyalkylèneglycols présentant des masses molaires de 200 à 6000, et/ou
C3) des aldéhydes aliphatiques en C₁-C₈,
sont fondus à des températures de 160 à 280°C, transformés pendant un temps de séjour de 5 à 20 min, dégazés sous vide, évacués et granulés, ou, le cas échéant avec addition de catalyseurs acides, évacués via un outil de moulage et façonnés sous forme de profilé, de tube ou de plaque, les composés difonctionnels B) et les autres composés fonctionnels C) pouvant être prémélangés avec les mélanges A) avant le dosage dans les malaxeurs continus ou les composés difonctionnels B) et les autres composés fonctionnels C) étant dosés après la fusion du mélange A) dans la masse fondue de A) dans les malaxeurs continus.

9. Procédé pour la préparation de polymères de dérivés triaziniques pour produits semi-finis et substances de moulage avec une meilleure ténacité et une résistance élevée aux flammes et une résistance élevée, **caractérisé en ce que**, dans des réacteurs agités avec une sortie dans le fond, le cas échéant un séparateur d'azéotrope et un condensateur, des dispersions dans des hydrocarbures en C₅-C₁₂ et/ou des cétones en C₃-C₁₂ ou des solutions dans du diméthylsulfoxyde, du diméthylformamide et/ou du diméthylacétamide, avec une teneur en solides de 5 à 70% en masse, constituées par
A) 60 à 95% en masse de mélanges de dérivés triaziniques de
A1) 20 à 70% en masse de dérivés triaziniques avec des groupes hydroxyalkylamino de formule 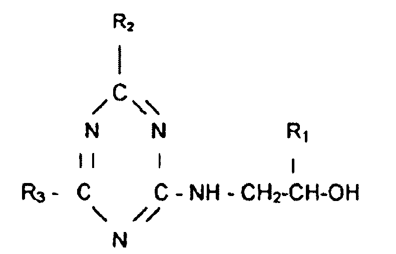
R₁ = H ou C₁-C₄-alkyle
R₂ = -H ; -OH ; C₁-C₄-alkyle ; -C₆H₅ ; -NH₂ ; -NH-CH₂-CHR₁-OH ; -NH-CH₂-OR₁ ou -N(-CH₂-OR₁)
R₃ = -H ; -OH ; C₁-C₄-alkyle ; -C₆H₅ ; -NH₂ ; -NH-CH₂-CHR₁-OH ; -NH-CH₂-OR₁ ou -N(-CH₂-OR₁)₂,
le nombre de groupes hydroxyamino étant de 1 à 3, et
A2) 80 à 30% en masse de dérivés triaziniques avec des groupes bis(hydroxyalkyl)amino de formule 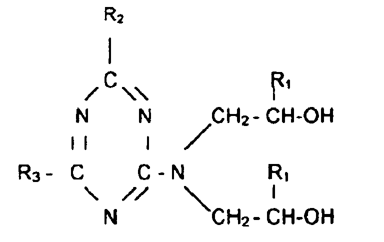
R₁ = H ou C₁-C₄-alkyle
R₂ = -H ; -OH ; C₁-C₄-alkyle ; -C₆H₅ ; -NH₂ ; -NH-CH₂-CHR₁-OH ; -N[CH₂-CHR₁-OH]₂ ; -NH-CH₂-OR₁ ou -N(-CH₂-OR₁)₂,
R₃ = -H ; -OH ; C₁-C₄-alkyle ;-C₆H₅ ; -NH₂ ;-NH-CH₂-CHR₁-OH ; -N[CH₂-CHR₁-OH]₂ -NH-CH₂-OR₁, ou -N(-CH₂-OR₁)₂,
le nombre de groupes hydroxyamino étant de 2 à 6,
B) 5 à 40% en masse de composés multifonctionnels, constitués par
B1) des isocyanates de formule R (N = C = O)ₓ, où R = C₄-C₁₈-alkyle, C₅-C₈-cycloalkyle et/ou C₆-C₁₅-aryle et x = 2 ; 3 ; 4, et/ou des polyesters ou des polyéthers oligomères avec des groupes terminaux de type isocyanate et des masses molaires de 200 à 5000, ou
B2) des acides dicarboxyliques aliphatiques en C₂-C₃₆, des esters d'acides dicarboxyliques aliphatiques en C₂-C₃₆ ou des chlorures d'acides dicarboxyliques aliphatiques en C₂-C₃₆, des anhydrides d'acides dicarboxyliques aliphatiques en C₄-C₆ et/ou des acides carboxyliques aromatiques, polybasiques en C₈-C₂₃, des esters d'acides carboxyliques aromatiques, polybasiques en C₈-C₂₃, des chlorures d'acides carboxyliques aromatiques, polybasiques en C₈-C₂₃, ou des anhydrides d'acides carboxyliques aromatiques, polybasiques en C₈-C₂₃, ou
B3) des composés diglycidyliques et/ou triglycidyliques aliphatiques en C₈-C₂₅ ou aromatiques en C₁₂-C₂₈,
et le cas échéant
C) 1 à 20% en masse d'autres composés fonctionnels, constitués par
C1) des composés dihydroxy aliphatiques en C₂-C₁₈, cycloaliphatiques en C₅-C₈ et/ou aromatiques en C₆-C₁₅, et/ou
C2) des polyalkylèneglycols présentant des masses molaires de 200 à 6000, et/ou
C3) des aldéhydes aliphatiques en C₁-C₈,
sont homogénéisées et transformées à des températures de 50 à 150°C, des pressions de 1 à 15 bars et des temps de séjour de 40 min à 12 heures et, le cas échéant après une concentration par distillation, les produits de réaction polymères sont évacués et séchés par séchage par pulvérisation ou après filtration et la transformation est le cas échéant continuée dans une deuxième étape de réaction après fusion dans le malaxeur continu à des températures de 160 à 280°C et les produits de réaction sont dégazés, évacués et granulés, où, en fonction de la température de réaction et de la réactivité des réactifs, les composés difonctionnels B) et les autres composés fonctionnels C) sont ajoutés totalement ou par portions ou en continu dans les mélanges A) dans le réacteur agité.

10. Utilisation de polymères constitués par des dérivés triaziniques selon l'une ou plusieurs des revendications 1 à 7 pour la réalisation de produits comprimés ou moulés par injection, non réticulés ou réticulés, destinés à des utilisations dans l'électrotechnique et l'électronique, pour la réalisation de feuilles, de fibres, de tubes, de plaques, de corps creux, de microcapsules contenant des solides ou des liquides pour des papiers photo et de copie photosensibles et sensibles à la pression ainsi que dans la pharmacie et l'agrochimie, pour la réalisation de mousses pour l'isolation thermique et acoustique dans la construction et dans l'industrie des véhicules, de revêtements dans l'industrie des véhicules, des appareils et des meubles, de substances pressées en couches pour des utilisations dans la construction et dans l'industrie des meubles et de matériaux support plats imprégnés, en particulier sous forme de matériaux support imprégnés plats dans l'industrie du textile et du papier.
